(19) Europäisches Patentamt
European Patent Office
Office européen des brevets

(11) **EP 3 368 393 B1**

(12) **EUROPÄISCHE PATENTSCHRIFT**

(45) Veröffentlichungstag und Bekanntmachung des Hinweises auf die Patenterteilung:
**15.04.2020 Patentblatt 2020/16**

(21) Anmeldenummer: **16788090.5**

(22) Anmeldetag: **27.10.2016**

(51) Int Cl.:
**B62D 5/04** *(2006.01)* **B62D 15/02** *(2006.01)*

(86) Internationale Anmeldenummer:
**PCT/EP2016/075902**

(87) Internationale Veröffentlichungsnummer:
**WO 2017/072217 (04.05.2017 Gazette 2017/18)**

(54) **ELEKTROMECHANISCHE HILFSKRAFTLENKUNG, VERFAHREN ZUR BESTIMMUNG EINES ABSOLUTEN DREHWINKELS UND VERFAHREN ZUR KALIBRIERUNG EINER MESSEINRICCHTUNG ZUR MESSUNG EINES ABSOLUTEN DREHWINKELS**

ELECTROMECHANICAL POWER STEERING DEVICE, METHOD TO DETERMINE AN ABSOLUTE STEERING ANGLE AND METHOD FOR CALIBRATING AN ABSOLUTE STEERING ANGLE MEASURING DEVICE.

DISPOSITIF DE DIRECTION ASSISTÉE ÉLECTROMÉCHANIQUE, PROCÉDÉ DE CALCUL D'UN ANGLE DE BRAQUAGE ABSOLU ET PROCÉDÉ DE CALIBRATION D'UN DISPOSITIF DE MÉSURE DE L'ANGLE ABSOLU DE BRAQUAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2015 DE 102015013965**

(43) Veröffentlichungstag der Anmeldung:
**05.09.2018 Patentblatt 2018/36**

(73) Patentinhaber:
• **thyssenkrupp Presta AG**
**9492 Eschen (LI)**
• **thyssenkrupp AG**
**45143 Essen (DE)**

(72) Erfinder:
• **ERNSTSON, Gernot**
**6800 Feldkirch (AT)**

• **TOTH, Tivadar**
**2071 Paty (HU)**
• **SCHWARZKOPF, Konstantin**
**9444 Diepoldsau (CH)**
• **KNOLL, Peter**
**88131 Lindau (DE)**
• **SEN, Sedat**
**9435 Heerbrugg (CH)**

(74) Vertreter: **thyssenkrupp Intellectual Property GmbH**
**ThyssenKrupp Allee 1**
**45143 Essen (DE)**

(56) Entgegenhaltungen:
**DE-A1-102013 218 954    DE-A1-102014 210 245**

**Beschreibung**

Die vorliegende Erfindung betrifft eine elektromechanischen Hilfskraftlenkung mit den Merkmalen des Oberbegriffs des Anspruchs 1 und ein Verfahren zum Messen des absoluten Lenkwinkels einer Lenkwelle einer elektromechanischen Hilfskraftlenkung mit den Merkmalen des Oberbegriffs des Anspruchs 10.

Weiter betrifft die Erfindung ein Verfahren zur Kalibration einer Messeinrichtung für die Messung des absoluten Lenkwinkels einer Lenkwelle einer elektromechanischen Hilfskraftlenkung.

Lenkwinkelsensoren messen den Einschlagwinkel des Lenkrades eines Kraftfahrzeuges. Dementsprechend soll unter dem Begriff "Lenkwinkel" in der vorliegenden Beschreibung der Drehwinkel der Lenkwelle und des damit gekoppelten Lenkrades verstanden werden, nicht jedoch der Einschlagswinkel der gelenkten Räder des Fahrzeugs. Diese Information wird unter anderem für die Fahrdynamikregelung, dem elektronischen Stabilitäts-Programm (ESP) benötigt. Das generelle Problem bei solchen Drehwinkelbestimmungen besteht darin, dass die Lenkwelle mehrfache Umdrehungen ermöglicht, um das Lenksystem von Lenkanschlag zu Lenkanschlag zu bewegen. Daher ist bei den meisten verwendeten Sensoren eine ständige Registrierung und Speicherung der aktuellen Drehwinkelposition des Lenkrads erforderlich, da gängige Winkelsensoren maximal 360° messen können, ein Kraftfahrzeuglenkrad aber einen Winkelbereich von +/-720° (vier Umdrehungen insgesamt) oder mehr hat.

In der Schrift DE 10 2008 011 448 A1 wird eine Lösung vorgeschlagen, bei der die Lenkwelle mit zwei Zahnradgetrieben abgetastet wird, wobei ein erstes Zahnradgetriebe ein Hypozykloidgetriebe ist, mit dem über mehrere Umläufe ein absoluter Winkelwert bestimmt werden kann. Zur Verbesserung der Winkelauflösung wird ein zweites Zahnradgetriebe eingesetzt, so dass der Drehwinkel genauer bestimmt werden kann. Durch die rechnerische Kombination der beiden abgetasteten Winkelsignale wird eine Absolutwinkelbestimmung ermöglicht. Die vorgeschlagene Lösung ist jedoch durch den Einsatz zweier Getriebe besonders komplex und die Kalibrierung des Absolutwinkels ist aufwändig, da die Neutralstellung bzw. Geradeausstellung jeweils erst gefunden werden muss.

Die DE 600 11 684 T2 offenbart eine Lösung bei der zwei Sensoren verwendet werden, von denen einer die Stellung der Lenkwelle und der andere die Stellung des Rotors des Servomotors überwacht, um eine eindeutige Messung des Lenkwellenwinkels über einen Bereich von Winkeln über eine volle Umdrehung hinaus zu erzeugen. Dabei erfolgt ein Hoch- und Runterzählen der Umdrehungen um durch die Kombination der beiden Signale einen Absolutwinkel zu bestimmen. Ein Nachteil dieser Lösung besteht in der aufwändigen Kalibrierung des Messsignals auf den Absolutwinkel.

Aus der WO 2015/078664 A1 ist eine integrale Baueinheit aus Lenkwinkelsensor und Drehmomentsensor bekannt, wobei der Lenkwinkelsensor ein Getriebe aufweist bei dem die Position zweier Zahnräder bestimmt wird um den absoluten Lenkwinkel zu errechnen.

Herkömmliche Systeme benötigen zudem eine Einrichtung, die auch bei ausgeschalteter Zündung den Lenkwinkel abtastet, damit bei einem Start des Fahrzeuges der richtige Lenkwinkel zur Verfügung steht und die Steuerung der elektromechanischen Servolenkung arbeiten kann. Weiter ist die Messgenauigkeit bei herkömmlichen System nur mit hohem Aufwand erreichbar.

Es ist daher Aufgabe der vorliegenden Erfindung eine elektromechanische Hilfskraftlenkung mit einem System zur Bestimmung des Absolutwinkels derer Lenkwelle bereitzustellen, das einfach und mit hoher Genauigkeit kalibriert werden kann und zudem einfach und kostengünstig im Aufbau ist.

Insbesondere soll ein hochgenauer absoluter Winkel der Drehung der Lenkwelle bestimmt werden.

Als absoluter Drehwinkel ist der Drehwinkel zu verstehen, der sich über mehrere Umdrehungen der Welle erstrecken kann, beispielsweise +/- 1800°.

Unter hochgenauer Messung ist zu verstehen, dass die Messgenauigkeit der Winkelmessung wenigstens der Genauigkeit des verwendeten Rotorlagesensors entspricht.

Das Dokument DE 10 2014 210245 A1 wird als nächstliegender Stand der Technik angesehen und offenbart eine elektromechanische Hilfskraftlenkung gemäß dem Oberbegriff des Anspruchs 1 sowie Verfahren zur Bestimmung des Drehwinkels.

Diese Aufgabe wird von einer elektromechanischen Hilfskraftlenkung mit den Merkmalen des Anspruchs 1 und einem Verfahren zur Messung des hochgenauen absoluten Lenkwinkels mit den Merkmalen der Ansprüche 10, 11 und 12 gelöst. In den Ansprüchen 13 bis 16 sind Kalibriermethoden zur Darstellung der Messung des hochgenauen absoluten Lenkwinkels dargestellt. In den Unteransprüchen sind vorteilhafte Weiterbildungen der Erfindung dargestellt.

Entsprechend schlägt die Erfindung eine elektromechanische Hilfskraftlenkung für ein Kraftfahrzeug vor, umfassend

- eine Lenkwelle, die drehbar um eine Lenkwellendrehachse gelagert ist und verschiedene Drehlagen einnehmen kann,
- einen Elektromotor mit einem Rotor, dessen Drehung in die Hilfskraftlenkung eingekoppelt wird, und einem Rotorlagesensor zur Messung eines Rotorwinkels $Y_t$ des Rotors,
- eine Lenkwinkelsensoreinheit zur Messung des absoluten Drehwinkels $X_{t1}$ der Drehlage der Lenkwelle im Vergleich zu einer vordefinierten Ausgangsdrehlage,

bei der die Hilfskraftlenkung weiter umfasst:

- eine Auswerteeinheit zur Kombination des Rotorwinkels Yt mit dem absoluten Drehwinkel Xt1 zur Bestimmung eines hochgenauen absoluten Drehwinkels Xt der Drehlage der Lenkwelle,
- wobei die Auswerteeinheit Mittel zur Speicherung von mindestens zwei Messtupeln umfasst, wobei jedes Messtupel einen Winkelwert eines Rotorwinkels (Yk) und einen Winkelwert eines zugehörigen absoluten Drehwinkels (Xk) der Drehlage der Lenkwelle umfasst,
- wobei die Auswerteeinheit einen Addierer zur Berechnung des hochgenauen absoluten Drehwinkels Xt der Drehlage der Lenkwelle umfasst, der ausgehend von einem gespeicherten Messtupel Xk, Yk durch Addition oder Subtraktion des gemessenen Rotorwinkels Yt den hochgenauen absoluten Drehwinkel Xt der Drehlage der Lenkwelle bestimmen kann.

Das bedeutet, dass die Genauigkeit der Messung direkt durch die Genauigkeit des Rotorlagesensors bestimmt wird, obwohl der Rotorlagesensor sich vielfach umdreht, während der nur wenigen Umdrehungen, die die Lenkwelle maximal ausführt. Die Lenkwinkelsensoreinheit wird nur genutzt, um die ungefähre Lage zu bestimmen. Dabei wird bevorzugt genau eine Lenkwinkelsensoreinheit genutzt.

Üblicherweise sind in Kraftfahrzeugen die Lenkwellen in eine Eingangswelle oder obere Lenkwelle, die mit einem Steuerrad verbunden ist, und eine Ausgangswelle oder untere Lenkwelle, die mit dem Lenkgetriebe zur Verschwenkung der Räder verbunden ist, geteilt und mit einem Drehstab drehelastisch miteinander verbunden. Die Verdrehung der oberen gegenüber der unteren Lenkwelle wird genutzt, um das von einem Fahrer in das Lenksystem eingebrachte Drehmoment zu bestimmen. Dabei werden allerdings nur wenige Winkelgrade an relativer Verdrehung zugelassen, um die Steuerbarkeit des Kraftfahrzeuges zu gewährleisten. Im Sinne der Erfindung ist es möglich, den hochgenauen absoluten Drehwinkel der Drehlage der oberen Lenkwelle oder aber alternativ der unteren Lenkwelle zu bestimmen. Die vorgelegten Vorrichtungen und Verfahren können beide Aufgaben lösen. Entsprechend wäre dann unter dem Synonym "Lenkwelle" die obere Lenkwelle oder die untere Lenkwelle anzunehmen. Allerdings ist es zu bevorzugen, die Drehlage der unteren Lenkwelle hochgenau zu bestimmen.

Damit die Lenkwinkelsensoreinheit die ungefähre Lage über mehrere Lenkwellenumdrehungen sicher bestimmen kann sind weitere Merkmale vorteilhafterweise ausgebildet.

So ist es bevorzugt, dass eine um die Lenkwellendrehachse umlaufende nach außen gerichtete erste Verzahnung vorgesehen ist, die mit der Lenkwelle drehfest gekoppelt ist und ein zweites Zahnrad vorgesehen ist, das um eine zweite Zahnradachse drehbar gelagert ist, mit einer um die zweite Zahnradachse umlaufenden nach außen gerichteten zweiten Verzahnung vorgesehen ist, wobei die zweite Zahnradachse parallel und beabstandet zur Lenkwellendrehachse angeordnet ist und die erste Verzahnung und die zweite Verzahnung in Eingriff miteinander stehen.

Weiter ist es zu bevorzugen, wenn ein drittes Zahnrad vorgesehen ist, das um eine dritte Zahnradachse drehbar gelagert ist, mit einer nach außen gerichteten, um die dritte Zahnradachse umlaufenden dritten Verzahnung, wobei die dritte Zahnradachse parallel und beabstandet zur Lenkwellendrehachse und parallel beabstandet zur zweiten Zahnradachse angeordnet ist.

Zur einfachen magnetischen Abtastung des Drehwinkels ist bevorzugt ein magnetisches Substrat vorgesehen ist, das mit dem dritten Zahnrad drehfest verbunden oder integral das dritte Zahnrad bildet, wobei dessen Drehlage durch ein Sensorelement abtastbar ist. Durch die Kombination der Zahnräder miteinander wird eine Getriebe-Übersetzung dargestellt, so dass im bevorzugten Fall das magnetische Substrat oder einfach der Magnet sich langsamer dreht als die Drehung der abzutastenden Lenkwellendrehung. Insbesondere wird das Substrat oder der Magnet nur maximal einmal um 360° verdreht, obwohl die Lenkwelle mehrere Umdrehungen, beispielsweise vier Umdrehungen ausführt.

Zur Darstellung der Getriebe-Übersetzung, insbesondere der Untersetzung in eine langsamere Umdrehung, ist mit Vorzug das dritte Zahnrad im zweiten Zahnrad teilweise aufgenommen und drehbar um die dritte Zahnradachse gelagert.

Zur einfachen Darstellung eines exzentrischen Getriebes kann ein viertes Zahnrad vorgesehen sein, dass eine nach innen gerichtete, um die zweite Zahnradachse und dritte Zahnradachse umlaufende vierte Verzahnung aufweist, die mit der dritten Verzahnung in Eingriff steht.

Insbesondere ist die vierte Verzahnung mit Vorteil in ihrer Drehlage in Bezug auf die Lenkwellenachse und die zweite Zahnradachse und die dritte Zahnradachse ruhend und unverschieblich angeordnet.

Insbesondere kann die Bestimmung des hochgenauen Drehwinkels Xt mit den oben aufgeführten vier Verzahnungen gleichbedeutend mit maximal vier Zahnrädern erfolgen, wobei zusätzlich die Einkopplung der Drehung des Rotors in die Hilfskraftlenkung im System enthalten ist.

Mit Vorteil ist der Aufbau geeignet, die Lenkwinkelsensoreinheit integral mit einer Drehmomentsensoreinheit zur Bestimmung des in die Lenkwelle von einem Fahrer eingebrachten Drehmomentes der Lenkwelle in einer integralen Baueinheit darzustellen. Dadurch können die mechanischen und elektrischen Kopplungen kombiniert und das gesamte System im Aufbau vereinfacht werden.

Weiterhin wird die Aufgabe der Erfindung gelöst durch ein Verfahren zur Bestimmung eines hochgenauen absoluten Drehwinkels Xt der Drehlage einer drehbar gelagerten Lenkwelle, wobei die Drehung eines Rotors eines Elektromotors mit einem Getriebe mit einem Getriebeübersetzungsfaktor K zur Hilfskraftunterstützung in die Drehung der Lenkwelle eingekoppelt wird, wobei bei dem Verfahren die Drehlage der Drehung des Rotors mit einem Rotorlagesensor gemessen wird und unter Nutzung der Anzahl der erfolgten Umdrehungen des Rotors dieser Wert direkt zur Bestimmung des hochgenauen absoluten Drehwinkels der Lenkwelle genutzt wird. Während der normalen Messung während des Betriebs des Kraftfahrzeugs wird entsprechend die Lenkwinkelsensoreinheit nicht zur Bestimmung des hochgenauen absoluten Drehwinkels genutzt. Die Lenkwinkelsensoreinheit wird zur Kalibration von Anfangswerten und der Festlegung der Ausgangsdrehlage eingesetzt. Weiter kann die Lenkwinkelsensoreinheit als Rückfallebene im Fehlerfall und/oder zu Detektion von möglichen Fehlern in der Messung genutzt werden.

Insbesondere umfasst das Verfahren zur Bestimmung eines hochgenauen absoluten Drehwinkels Xt der Drehlage einer drehbar gelagerten Lenkwelle die folgenden Schritte:

a) Messen eines Rotorwinkels Yt der Drehlage des Rotors mit einem Rotorlagesensor;

b) Auslesen eines gespeicherten aktuellen Umdrehungszahlwert N des Rotors in Bezug zu einem Anfangswert des Rotorwinkels Yk0 mit einem zugehörigen Anfangswert des Drehwinkels Xk0, wobei die Werte in einem Kalibrierverfahren bestimmt worden sind;

c) Berechnung des hochgenauen Absolutwertes des Drehwinkels Xt der Lenkwelle nach der Gleichung:

$$Xt = Xk0 + (Yt-Yk0)/K + N*360°/K.$$

Alternativ kann die Aufgabe auch gelöst werden durch ein Verfahren zur Bestimmung eines hochgenauen absoluten Drehwinkels der Drehlage einer drehbar gelagerten Lenkwelle, wobei die Drehung eines Rotors eines Elektromotors in die Drehung der Lenkwelle mit einem Getriebe mit einem Getriebeübersetzungsfaktor K zur Hilfskraftunterstützung in die Drehung der Lenkwelle eingekoppelt wird, wobei das Verfahren folgende Schritte umfasst:

a) Messen eines Rotorwinkels Yt der Drehlage des Rotors mit einem Rotorlagesensor;

b) Messen des Drehwinkels Xt1 der absoluten Drehlage der Lenkwelle mit einer Lenkwinkelsensoreinheit, wobei der Drehwinkel Xt1 mit einem Getriebe mit einem Übersetzungsfaktor UF abgetastet wird;

c) Auswahl aus einer Menge von vorbestimmten Kalibrationsdatensätzen (Messtupel), bestehend jeweils aus einem gemessenen Drehwinkel Xk und einem zugehörigen gemessenen Rotorwinkel Yk, eines zum aktuellen Messwert des Drehwinkels Xt1 am nächsten gelegenen Kalibrationsdatensatz Xk1, Yk1;

d) Bestimmung der Anzahl der Umdrehungen N1 des Rotors, die erfolgt sind, um vom Drehwinkel der Lenkwelle aus dem Kalibrationsdatensatz Xk1 zum aktuell gemessenen Drehwinkel Xt1 der Lenkwelle zu gelangen;

e) Berechnung des hochgenauen Absolutwertes des Drehwinkels der Lenkwelle nach der Gleichung:

$$Xt = Xk1 + ((Xt1-Xk1)/(|Xt1-Xk1|) *(|Yt-Yk1|)/K) + N1*360°/K.$$

Bevorzugt sind entsprechend den unten dargestellten Kalibrationsverfahren so viele Kalibrationsdatensätze bestimmt, dass die Anzahl der Umdrehungen N1 stets den Wert 0 (=Null) aufweist. Das bedeutet, dass für jede Umdrehung des Rotors um 360° ein, bevorzugt genau ein einziger, Kalibrationsdatensatz bestimmt wird.

Ist jedoch nur ein einziger Kalibrationsdatensatz bestimmt, so gehen die beiden Lösungsverfahren ineinander über.

Das Verfahren zur Bestimmung eines hochgenauen absoluten Drehwinkels kann auch insofern weiterentwickelt werden, dass neben dem Winkel des Rotors auch die Drehrichtung beachtet wird. Entsprechend gibt es für jede Drehrichtung separate Kalibrationsdatensätze. Auf diese Weise können Hysteresen in den Getriebekomponenten kompensiert werden und die Genauigkeit weiter erhöht werden.

Wichtige Vorteile des Verfahrens sind darin zu sehen, dass Ungenauigkeiten im Getriebe der Lenkwinkelsensorik kaum Einfluss auf das erzielte Messergebnis haben. Entsprechend kann das Getriebe der Lenkwinkelsensorik preisgünstig dargestellt werden.

Die Kalibrierung zur Bestimmung von Kalibrationsdatensätzen kann erfolgen mit einem Verfahren zur Kalibrierung einer Messeinrichtung zur Messung eines hochgenauen absoluten Drehwinkels $Xt$ der Drehlage einer drehbar gelagerten Lenkwelle, wobei die Drehung eines Rotors eines Elektromotors mit einem Getriebe mit einem Getriebeübersetzungsfaktor $K$ zur Hilfskraftunterstützung in die Drehung der Lenkwelle eingekoppelt wird, wobei das Verfahren folgende Schritte umfasst:

a) Antreiben des Elektromotors zur Verstellung der Drehlage der Lenkwelle in eine erste Richtung;

b) Fortwährendes Messen eines Rotorwinkels $Yt$ der Drehlage des Rotors mit einem Rotorlagesensor mit einem Abtastintervall;

c) Fortwährendes Messen des Drehwinkels $Xt1$ der absoluten Drehlage der Lenkwelle mit einer Lenkwinkelsensoreinheit, wobei der Drehwinkel $Xt1$ mit einem Getriebe mit einem Übersetzungsfaktor $UF$ abgetastet wird und, wobei die Abtastung mit dem genannten Abtastintervall erfolgt;

d) Bei Änderung des Drehwinkels $Xt1$ gegenüber dem im unmittelbar zuvor liegenden Abtastzeitpunkt gemessenen Wert Abspeichern des Messwertepaares aus Rotorwinkel $Xt1ia$, $Yia$;

e) Antreiben des Elektromotors zur Verstellung der Drehlage der Lenkwelle in eine zweite Richtung;

f) Fortwährendes Messen eines Rotorwinkels $Yt$ der Drehlage des Rotors mit einem Rotorlagesensor mit dem vorgenannten Abtastintervall;

g) Fortwährendes Messen des Drehwinkels $Xt1$ der absoluten Drehlage der Lenkwelle mit einer Lenkwinkelsensoreinheit, wobei der Drehwinkel $Xt1$ mit einem Getriebe mit einem Übersetzungsfaktor $UF$ abgetastet wird;

h) Bei Änderung des Drehwinkels $Xt1$ gegenüber dem im unmittelbar zuvor liegenden Abtastzeitpunkt gemessenen Wert Abspeichern des Messwertepaares aus Rotorwinkel $Xt1ib$, $Yib$;

i) Bildung eines Messtupels bestehend aus absoluten Drehwinkel der Lenkwelle $Xk0$, als Mittelwert der beiden gemessenen Drehwinkel $Xt1a$ und $Xt1b$, und Rotorwinkel $Yk0$, als Mittelwert der beiden gemessenen Rotorwinkel $Ya$ und $Yb$

j) Einspeichern des Messtupels $Xk0$, $Yk0$ als Kalibrationsdatensatz in ein Mittel zur Speicherung und Einspeicherung des Wertes Null ($=0$) als aktuellen Umdrehungszahlwert $N$ in eine Speichereinheit.

Zur Bestimmung weiterer Kalibrationsdatensätze kann es vorgesehen sein, dass nach Abspeichern eines ersten Messtupels $Xk0$, $Yk0$ folgende weitere Schritte ein oder mehrmals ausgeführt werden:

a) erneutes Antreiben des Elektromotors zur Verstellung der Drehlage der Lenkwelle in eine erste Richtung;

b) Fortwährendes Messen eines Rotorwinkels $Yt$ der Drehlage des Rotors mit einem Rotorlagesensor;

c) Fortwährendes Messen des Drehwinkels $Xt1$ der absoluten Drehlage der Lenkwelle mit einer Lenkwinkelsensoreinheit, wobei der Drehwinkel $Xt1$ mit einem Getriebe mit einem Übersetzungsfaktor $UF$ abgetastet wird;

d) Bei Erreichen eines vordefinierten Differenzwinkels Abspeichern des Messwertepaares aus Rotorwinkel $Xt1ia$, $Yia$;

e) Antreiben des Elektromotors zur Verstellung der Drehlage der Lenkwelle in eine zweite Richtung;

f) Fortwährendes Messen eines Rotorwinkels $Yt$ der Drehlage des Rotors mit einem Rotorlagesensor;

g) Fortwährendes Messen des Drehwinkels $Xt1$ der absoluten Drehlage der Lenkwelle mit einer Lenkwinkelsensoreinheit, wobei der Drehwinkel $Xt1$ mit einem Getriebe mit einem Übersetzungsfaktor $UF$ abgetastet wird;

h) Bei Änderung des Drehwinkels Xt1 gegenüber dem unmittelbar zuvor gemessenen Wert Abspeichern des Messwertepaares aus Rotorwinkel Xtlib, Yib;

i) Bildung eines Messtupels bestehend aus dem absoluten Drehwinkel der Lenkwelle Xk, als Mittelwert der beiden gemessenen Drehwinkel Xt1a und Xt1b, und Rotorwinkel Yk, als Mittelwert der beiden gemessenen Rotorwinkel Ya und Yb

j) Einspeichern des Messtupels Xk, Yk als Kalibrationsdatensatz in ein Mittel zur Speicherung.

Zur Nutzung des Verfahrens zur Messung eines hochgenauen absoluten Drehwinkels, bei dem die Drehrichtung genutzt wird kann die Kalibrierung mit einem Verfahren durchgeführt werden, das folgende Schritte umfasst:

a) Antreiben des Elektromotors zur Verstellung der Drehlage der Lenkwelle in eine erste Drehrichtung;

b) Fortwährendes Messen eines Rotorwinkels Yt der Drehlage des Rotors mit einem Rotorlagesensor mit einem Abtastintervall;

c) Fortwährendes Messen des Drehwinkels Xt1 der absoluten Drehlage der Lenkwelle mit einer Lenkwinkelsensoreinheit, wobei der Drehwinkel Xt1 mit einem Getriebe mit einem Übersetzungsfaktor UF abgetastet wird und wobei die Abtastung mit dem genannten Abtastintervall erfolgt;

d) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ia, Yia als erstes Kalibrationsdatensatz für die erste Drehrichtung;

e) Einspeichern des Wertes Null (=0) als aktuellen Umdrehungszahlwert Na in eine Speichereinheit zum zughörigen ersten Kalibrationsdatensatz für die erste Drehrichtung;

f) Antreiben des Elektromotors zur Verstellung der Drehlage der Lenkwelle in eine zweite Drehrichtung;

g) Fortwährendes Messen eines Rotorwinkels (Yt) der Drehlage des Rotors mit einem Rotorlagesensor mit dem vorgenannten Abtastintervall;

h) Fortwährendes Messen des Drehwinkels Xt1 der absoluten Drehlage der Lenkwelle mit einer Lenkwinkelsensoreinheit, wobei der Drehwinkel Xt1 mit einem Getriebe mit einem Übersetzungsfaktor UF abgetastet wird;

i) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ib, Yib als erster Kalibrationsdatensatz für die zweite Drehrichtung;

j) Einspeichern des Wertes Null (=0) als aktuellen Umdrehungszahlwert Nb in eine Speichereinheit zum zugehörigen zweiten Kalibrationsdatensatz für die zweite Drehrichtung.

Zur Bestimmung der aktuellen Umdrehungszahl des Rotors kann ein Verfahren zur Kalibrierung einer Messeinrichtung eingesetzt werden, folgende Schritte umfasst:

a) Fortwährendes Messen des Rotorwinkels Yt mit dem genannten Abtastintervall;

b) Bei Vergrößerung des Rotorwinkels Yt von einem Zeitschritt des Abtastintervalls zum nächsten Zeitschritt um einen Betrag von mehr als 80° wird der eingespeicherte Umdrehungszahlwert um eine Zählung erhöht und als aktueller Umdrehungszahlwert N abgespeichert;

c) Bei Verkleinerung des Rotorwinkels Yt von einem Zeitschritt des Abtastintervalls zum nächsten Zeitschritt um einen Betrag von mehr als +80° wird der eingespeicherte Umdrehungszahlwert um eine Zählung reduziert und als aktueller Umdrehungszahlwert N abgespeichert.

Der Sprung $|\Delta Yt|$, ab dem der Umdrehungszahlwert N um eins verändert wird, bestimmt sich aus der maximal möglichen Lenkgeschwindigkeit und der Abtastfrequenz. Es können aber auch Werte von 90° oder alternativ von 120° bevorzugt als Sprung-Größe herangezogen werden. Der Sprung des Rotorwinkels, der zur Veränderung des Umdrehungszahlwertes N herangezogen wird sollte allerdings kleiner als 290°, bevorzugt kleiner als 200° betragen. Bei einer maximalen Lenkgeschwindigkeit von 3000°/Sekunde Lenkwinkeländerung und einer Abtastfrequenz von 1kHz wäre von einem Abtastschritt zum nächsten Abtastschritt eine Lenkwinkeländerung von 3° möglich. Das entspricht bei einer Übersetzung K von 22 Rotorumdrehungen zu einer Lenkwellenumdrehung einem Sprung von 66°. Bei niedrigeren maximal möglichen Lenkgeschwindigkeiten oder anderen Übersetzungen K sind entsprechend andere Werte einzusetzen.

Bevorzugte Ausführungsformen der Erfindung werden nachfolgend anhand der Zeichnungen näher erläutert. Gleiche bzw. funktionsgleiche Bauteile sind dabei figürübergreifend mit denselben Bezugszeichen versehen. Es zeigen:

Fig. 1:   eine räumliche Ansicht einer erfindungsgemäßen elektromechanischen Hilfskraftlenkung mit einem Elektromotor, einem Drehmomentsensor und einem Lenkwinkelsensor,

Fig. 2:   eine perspektivische Ansicht der Anordnung der Figur 1 von oben auf den Elektromotor mit Rotorlagesensor,

Fig. 3:   eine Detailansicht der integralen Baueinheit des Drehmomentsensors und des Lenkwinkelsensors,

Fig. 4:   eine Explosionsdarstellung der Anordnung der integralen Baueinheit auf der Lenkwelle,

Fig. 5:   eine Explosionsdarstellung der integralen Baueinheit von einer ersten Seite,

Fig. 6:   eine Explosionsdarstellung der integralen Baueinheit von einer zweiten Seite,

Fig. 7:   ein Diagramm aus dem die den Winkel- und Umdrehungsverläufen entsprechenden Sensorsignale ersichtlich sind,

Fig. 8:   eine vergrößerte Darstellung des Diagramms der Fig. 7,

Fig. 9:   eine detaillierte Darstellung eines Ausschnitts des Diagramms aus Fig. 7 mit eingezeichneten Fehlerbereichen,

Fig. 10:   eine schematische Darstellung einer elektromagnetischen Servolenkung mit Servounterstützung an der Lenksäule und einem Speicher, der auch bei ausgeschalteter Zündung mit Bordspannung versorgt wird,

Fig. 11:   eine schematische Darstellung einer anderen Ausführungsform einer elektromagnetischen Servolenkung mit Servounterstützung und Speicher,

Fig. 12:   eine schematische Darstellung einer weiteren Ausführungsform einer elektromagnetischen Servolenkung mit Servounterstützung an der Zahnstange und einem Speicher, der auch bei ausgeschalteter Zündung mit Bordspannung versorgt wird, sowie

Fig. 13:   eine schematische Darstellung einer weiteren Ausführungsform einer elektromagnetischen Servolenkung mit Servounterstützung an der Zahnstange und Speicher.

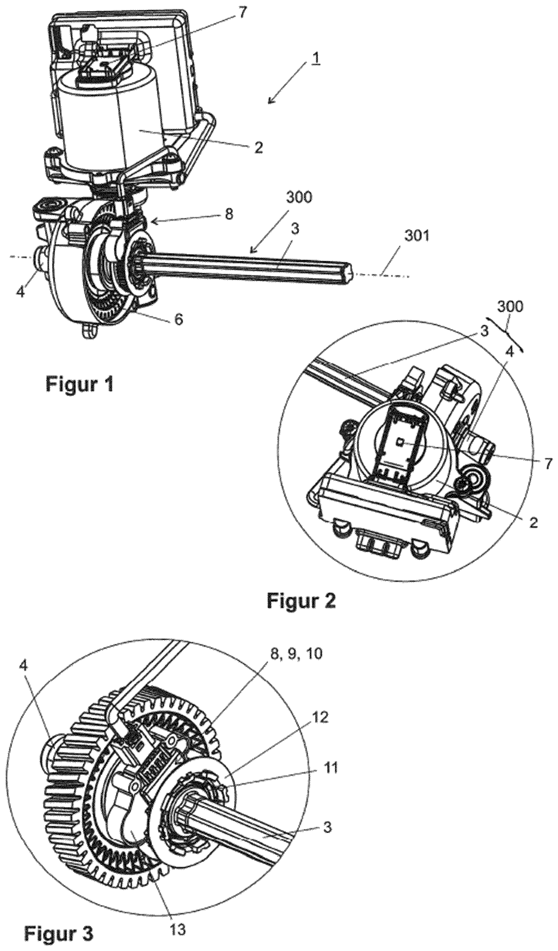

Die Figuren 1 bis 4 zeigen eine elektromechanische Hilfskraftlenkung 1 eines Kraftfahrzeuges mit einem Elektromotor 2, der an einer Lenksäule die Lenkbewegung eines Fahrers unterstützt. Zur Unterstützung ist der Rotor des Elektromotors über ein Getriebe 6, im Beispiel ein Schneckenradgetriebe, in die Drehung der Lenkwelle 300 eingekoppelt. Die Lenkwelle 300 weist eine obere Lenkwelle 3 und eine untere Lenkwelle 4 auf, die über einen Drehstab 5 miteinander verbunden sind und um eine Lenkwellenachse 301 drehbar gelagert sind. Die obere Lenkwelle 3 ist mit einem nicht dargestellten Lenkrad unmittelbar drehfest verbunden. Der Elektromotor 2 treibt über ein Getriebe 6 die untere Lenkwelle 4 an, die mit einem nicht dargestellten Zahnstangen-Lenkgetriebe verbunden ist. Der Elektromotor 2 weist einen Rotorlagesensor (RPS) 7 auf. Zudem ist eine integrale Baueinheit 8 mit einer Drehmomentsensoreinheit 9 und einer Lenkwinkelsensoreinheit 10 vorgesehen. Die Drehmomentsensoreinheit 9 erfasst die Verdrehung der oberen Lenkwelle 3 gegenüber der unteren Lenkwelle 4 als ein Maß des an der oberen Lenkwelle 3 manuell ausgeübten Drehmomentes. Die Lenkwinkelsensoreinheit 10 hingegen misst den aktuellen Lenkwinkel der unteren Lenkwelle 3.

Die Drehmomentsensoreinheit 9 weist einen drehfest mit der oberen Lenkwelle 3 verbunden Ringmagneten 11 (Permanentmagneten) und Magnetflussleiter 12 auf. Eine dazugehörige Sensoreinheit 13 ist raumfest mit der Einheit des Elektromotors 2 verbunden.

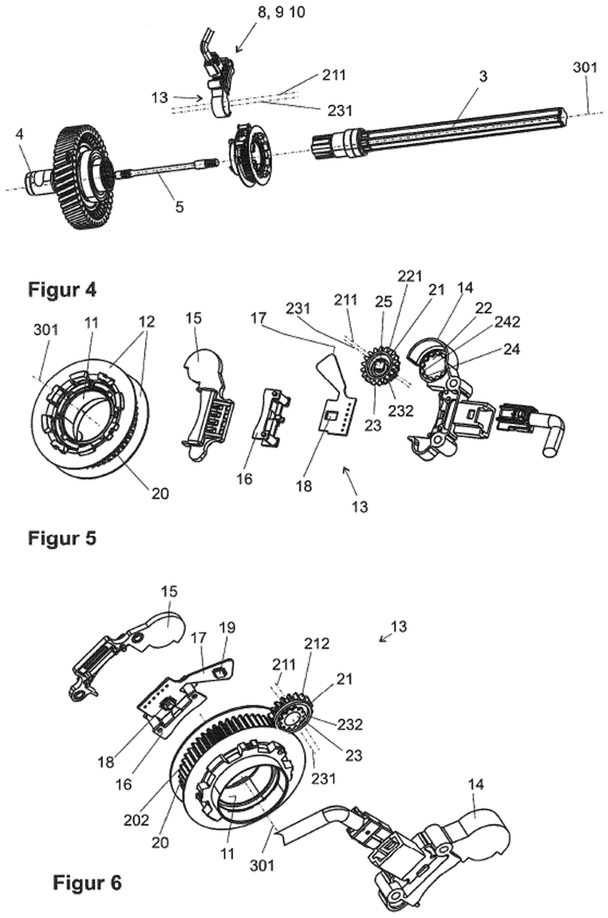

In den Figuren 4 bis 6 ist der Aufbau der integralen Baueinheit 8 im Detail dargestellt. Die Sensoreinheit 13 weist ein Gehäuse 14 mit einem Gehäusedeckel 15 auf und darin angeordnet einen Magnetflussleiter 16 und einen auf einer Leiterplatte 17 angeordneten Magnetsensor 18. Die Flussleiter 12, 16 dienen zur Konzentrierung des magnetischen Flusses an dem Magnetsensor 18.

Der Magnetsensor 18 detektiert die Verdrehung der mit dem Ringmagneten 11 verbunden Welle 3 gegenüber der mit einem der Magnetflussleiter 12 verbundenen unteren Welle 4.

Neben dem Magnetsensor 18 der Drehmomentsensoreinheit 9 ist auf der Leiterplatte 17 auch ein Sensorelement 19 der Lenkwinkelsensoreinheit 10 vorgesehen.

Der Ringmagnet 11 ist von einem ersten Zahnrad 20 mit einer nach außen gerichteten ersten Verzahnung 202 umfangseitig umgeben, das Teil der Lenkwinkelsensoreinheit 10 ist. Diese Verzahnung ist konzentrisch zur Lenkwellenachse 301 angeordnet und mit der unteren Lenkwelle 4 drehfest gekoppelt. In diese erste Verzahnung 202 des ersten Zahnrades 20 greift eine zweite umlaufende nach außen gerichtete zweite Verzahnung 212 eines zweite Zahnrades 21 ein, dass sich auf dem ersten Zahnrad 20 abwälzt und in einer Aufnahme des Gehäuses 14 drehbar um eine zweite Zahnradachse 211 gelagert ist. Die zweite Zahnradachse 211 ist parallel und versetzt zur Lenkwellenachse 301angeordnet. In dem zweiten Zahnrad 21 wiederum ist ein drittes Zahnrad 23 drehbar um eine dritte Zahnradachse 231 drehbar exzentrisch geführt. Entsprechend ist die dritte Zahnradachse 231 zur zweiten Zahnradachse 211 und zur Lenkwellenachse 301 parallel und versetzt angeordnet. Das dritte Zahnrad weist eine umlaufende nach außen gerichtete dritte Verzahnung 232 auf. Eine nach innen gerichtete umlaufende vierte Verzahnung 242 eines vierten Zahnrades 24 ist in der Aufnahme 22 im Gehäuse 14 angeordnet und steht in Eingriff mit der dritten Verzahnung 232, so dass diese dritte Verzahnung 232 entlang dieser vierten Verzahnung 242 abrollt. Die Zahnräder 20, 21, 23 bilden ein Stirnrädergetriebe, wobei alle Drehachsen 301, 201, 211, 231 zueinander parallel und zueinander versetzt angeordnet sind.

Die Drehbewegung der oberen Lenkwelle 3 wird somit über das Getriebe auf das dritte Zahnrad 23 übertragen, in welchem ein Permanentmagnet, gebildet durch ein magnetisches Substrat 25, angeordnet ist. Die Rotation des dritten Zahnrades 23 wird dann mithilfe des Sensorelementes 19 auf der Leiterplatte 17 erfasst. Alternativ zum Einsatz eines separaten Permanentmagneten kann das magnetische Substrat 25 in das dritte Zahnrad 23 integriert sein oder sogar das gesamte dritte Zahnrad bilden.

Das Sensorelement 19 der Lenkwinkelsensoreinheit 10 ist vorzugsweise ein Hall-Sensor, der gegenüber dem Permanentmagneten beziehungsweise dem magnetischen Substrat 25 des dritten Zahnrads 23 ruhend angeordnet ist.

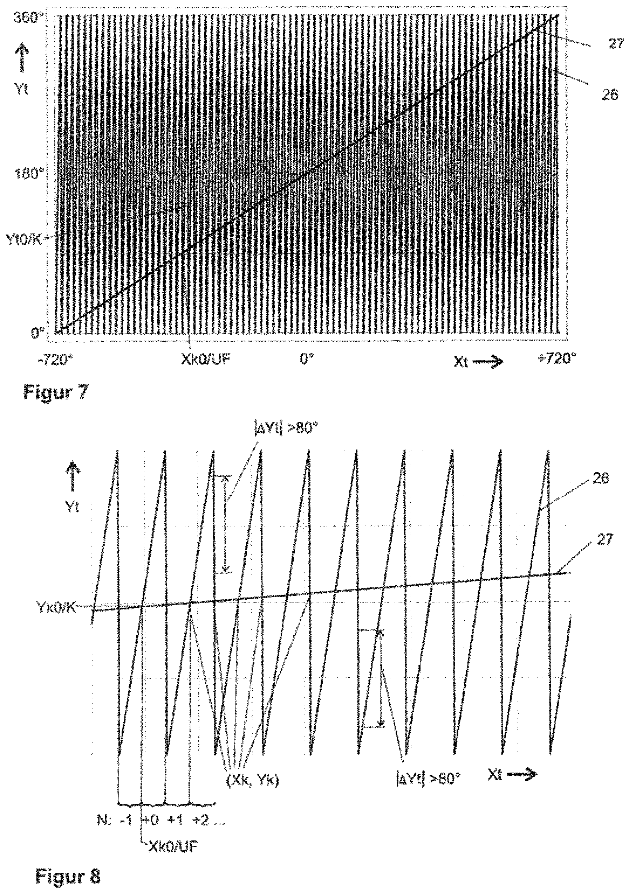

Der Lenkwinkelsensor kann in diesem Ausführungsbeispiel einen Bereich von vier Umdrehungen der Lenkwelle, insbesondere der unteren Lenkwelle 4, eindeutig erfassen. Dazu ist ein Übersetzungsfaktor UF vom ersten Zahnrad, das heißt von der unteren Lenkwelle 4, zum Gebergetriebeelement von 4:1 vorgesehen. Während die untere Lenkwelle 4 vier Umdrehungen vollzieht, dreht sich das dritte Zahnrad Gebergetriebeelement des Stirnrädergetriebes nur ein einziges Mal. In der hier dargestellten Ausführungsform ist das die Getriebeübersetzung mit einem Zahn Unterschied zwischen der Innenverzahnung der Aufnahme und dem Gebergetriebeelement verwirklicht. Damit kann ein absoluter Drehwinkel $Xt_1$ (vgl. Signal 27 in Figuren 7, 8, 9) der Drehlage der unteren Lenkwelle 4, auch über mehrere Umdrehungen der unteren Lenkwelle 4, bestimmt werden. Da die obere Lenkwelle 3 mit der unteren Lenkwelle 4 über den drehelastischen Drehstab 5 verbunden ist und nur geringe Verdrehwinkel zwischen den beiden Lenkwelle 3, 4 gegeneinander zugelassen werden, wird damit quasi auch die Drehlage der oberen Lenkwelle 3 bestimmt.

Es ist aber auch denkbar und möglich, das Getriebe so anzuordnen, dass direkt die Drehlage der oberen Lenkwelle 3 abgetastet wird. Dazu muss nur die erste Verzahnung direkt mit der oberen Lenkwelle 3 drehfest gekoppelt werden. Im Prinzip wird dann der Lenkwinkelsensor einfach vom oberen Teil auf den unteren Teil umgekehrt eingebaut. Dies ist allerdings nicht zu bevorzugen.

Die Kalibration zur Bestimmung der "Nulllage" oder eines anderen Anfangswertes erfolgt dabei einerseits mechanisch bei der Montage und andererseits durch das Festlegen eines entsprechenden Ausgangswertes in der elektronischen Auswerteeinheit.

Durch die Getriebeeinkopplung des Elektromotors in das Lenksystem mit dem Getriebe 6 ist die Drehlage der Lenkwelle direkt verknüpft mit der Drehlage des Rotors des Elektromotors. Dabei ist ein Getriebeübersetzungsfaktor K von der Drehung der unteren Lenkwelle 4 zur Drehung des Rotors im Beispiel von 1:20. Entsprechend ist der Rotorwinkel $Yt$ mit dem Lenkwinkel $Xt$ im Verhältnis von 20:1 gekoppelt. Entsprechend genau kann die Drehlage des Rotors die Drehlage der unteren Lenkwelle 4 widerspiegeln. Allerdings gibt es eine mehrfache Umdrehung, so dass das System stets "wissen" muss, wie hoch der aktuelle Umdrehungszahlwert N ist. Hier kann zur Kalibrierung der mit der Lenkwinkelsensoreinheit 10 bestimmte absolute Drehwinkel $Xt_1$ der unteren Lenkwelle 4 herangezogen werden.

Zur Regelung der elektromechanischen Servolenkung ist es bereits im Stand der Technik üblich, die Drehlage des Rotors mit einem Rotorpositionssensor zu bestimmen. Dies wird benötigt, um den Elektromotor genau zu steuern. Dazu ist auch eine genaue Bestimmung der Drehlage des Rotors dargestellt. Entsprechend ist der hochgenaue absolute Winkel $Xt$ der unteren Lenkwelle 4, der mit dem Rotorlagesensor RPS bestimmt wird, viel genauer bestimmt als der absolute Winkel $Xt_1$ der unteren Lenkwelle 4, der mit der Lenkwinkelsensoreinheit 10 bestimmt wird.

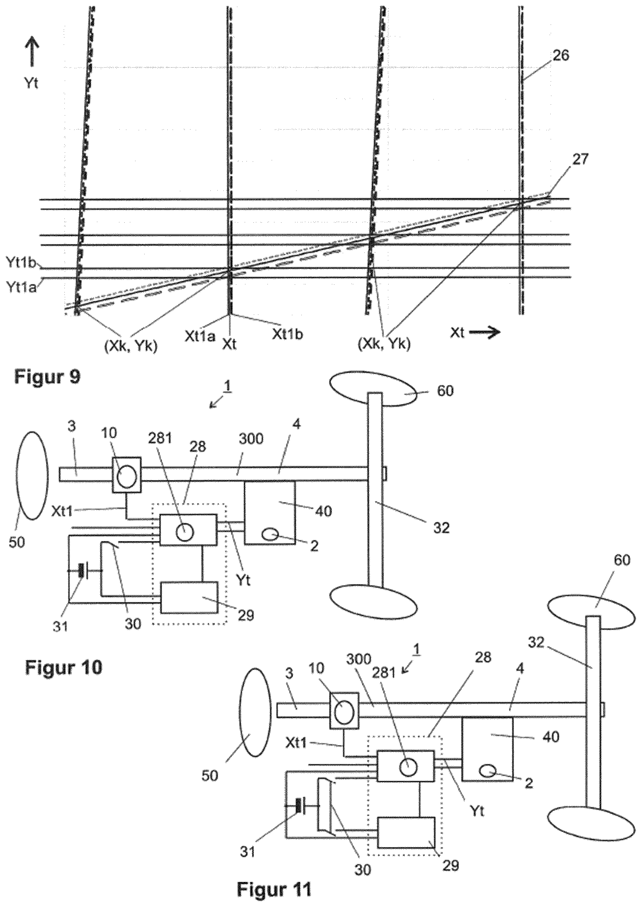

Während des laufenden Betriebes kann nach einer anfänglichen Kalibration auf die Auswertung der Messwerte der Lenkwinkelsensoreinheit 10 verzichtet werden. Die kalibrierten Werte müssen allerdings in einem entsprechenden Speicher 29 (vgl. Figuren 10 bis 13) gespeichert werden. Dadurch kann die Rechenzeit und der Rechenaufwand sowie der erforderliche Energiebedarf gesenkt werden.

Es sind verschiedene Methoden der Kalibrierung denkbar und möglich.

Anhand der Figuren 7, 8 und 9 werden im Weiteren das Messverfahren und verschiedene Methoden zur Kalibrierung erläutert.

In den Figuren 7, 8 und 9 sind der gemessene Winkel Yt des Rotors als Signal 26 und der gemessene Winkel Xt1 des Lenkwinkelsensors als Signal 27 gegen den hochgenauen absoluten Lenkwinkel Xt aufgetragen. In der Figur 9 sind dabei Abweichungen der Messungen je nach Drehrichtung veranschaulicht. Dabei sind sowohl Toleranzen im Getriebe als auch Spiele oder andere Hystereseeffekte als Ursache für die Abweichungen der Werte für den Rotorwinkel Yt1a im Vergleich zu Yt1b oder für den Lenkwinkel Xt1a im Vergleich zu Xt1b zu sehen. Wie in der Figur 9 veranschaulicht ist, haben große Abweichungen in der Rotorposition nur geringe Auswirkungen auf die Bestimmung der Lenkwellenposition.

Die eigentliche Messung oder Bestimmung des hochgenauen absoluten Drehwinkels Xt der unteren Lenkwelle 4, umfasst die folgenden Schritte:

d) Messen eines Rotorwinkels Yt der Drehlage des Rotors mit einem Rotorlagesensor 7;

e) Auslesen eines gespeicherten aktuellen Umdrehungszahlwert N des Rotors in Bezug zu einem Anfangswert des Rotorwinkels Yk0 mit einem zugehörigen Anfangswert des Drehwinkels Xk0, wobei die Werte in einem Kalibrierverfahren bestimmt worden sind;

f) Berechnung des hochgenauen Absolutwertes des Drehwinkels Xt der unteren Lenkwelle 4 nach der Gleichung:

$$Xt = Xk0 + (Yt-Yk0)/K + N*360°/K.$$

Alternativ kann das Messverfahren folgende Schritte umfassen:

a) Messen des Rotorwinkels Yt der Drehlage des Rotors mit dem Rotorlagesensor 7;

b) Messen des Drehwinkels Xt1 der absoluten Drehlage der untern Lenkwelle 4 mit einer Lenkwinkelsensoreinheit 10, wobei der Drehwinkel Xt1 mit einem Getriebe mit einem Übersetzungsfaktor UF abgetastet wird;

c) Auswahl aus einer Menge von vorbestimmten Kalibrationsdatensätzen (Messtupel), bestehend jeweils aus einem gemessenen Drehwinkel Xk und einem zugehörigen gemessenen Rotorwinkel Yk, eines zum aktuellen Messwert des Drehwinkels Xt1 am dichtesten gelegenen Kalibrationsdatensatz (Xk1, Yk1);

d) Bestimmung der Anzahl der Umdrehungen N1 des Rotors, die erfolgt sind, um vom Drehwinkel der Lenkwelle aus dem Kalibrationsdatensatz Xk1 zum aktuell gemessenen Drehwinkel Xt1 der Lenkwelle zu gelangen;

e) Berechnung des hochgenauen Absolutwertes des Drehwinkels der Lenkwelle nach der Gleichung:

$$Xt = Xk1 + ((Xt1-Xk1)/(|Xt1-Xk1|) *(|Yt-Yk1|)/K) + N1*360°/K.$$

Bevorzugt sind entsprechend den unten dargestellten Kalibrationsverfahren so viele Kalibrationsdatensätze bestimmt, dass die Anzahl N1 der Umdrehungen stets den Wert 0 aufweist. Das bedeutet, dass für jede Umdrehung des Rotors um 360° ein, bevorzugt genau ein einziger, Kalibrationsdatensatz bestimmt wird.

Ist jedoch nur ein einziger Kalibrationsdatensatz bestimmt, so gehen die beiden Lösungsverfahren ineinander über.

Wird das Verfahren zur Bestimmung eines hochgenauen absoluten Drehwinkels dahingehend weiterentwickelt, dass neben dem Winkel des Rotors auch die Drehrichtung beachtet wird, werden für jede Drehrichtung separate Kalibrationsdatensätze bestimmt.

Die Kalibrierung zur Bestimmung von Kalibrationsdatensätzen kann folgenden Schritten erfolgen:

a) Antreiben des Elektromotors 2 zur Verstellung der Drehlage der unteren Lenkwelle 4, und damit der gesamten Lenkwelle 300, in eine erste Richtung;

b) Fortwährendes Messen eines Rotorwinkels Yt der Drehlage des Rotors mit einem Rotorlagesensor 7 mit einem Abtastintervall;

c) Fortwährendes Messen des Drehwinkels Xt1 der absoluten Drehlage der unteren Lenkwelle 4 mit einer Lenkwinkelsensoreinheit 10, wobei der Drehwinkel Xt1 mit einem Getriebe mit einem Übersetzungsfaktor UF abgetastet wird und, wobei die Abtastung mit genannten Abtastintervall erfolgt;

d) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ia, Yia;

e) Antreiben des Elektromotors 2 zur Verstellung der Drehlage der unteren Lenkwelle 4 in eine zweite Richtung;

f) Fortwährendes Messen eines Rotorwinkels Yt der Drehlage des Rotors mit einem Rotorlagesensor 7 mit dem vorgenannten Abtastintervall;

g) Fortwährendes Messen des Drehwinkels Xt1 der absoluten Drehlage der unteren Lenkwelle 4 mit einer Lenkwinkelsensoreinheit 10, wobei der Drehwinkel Xt1 mit einem Getriebe mit einem Übersetzungsfaktor UF abgetastet wird;

h) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ib, Yib;

i) Bildung eines Messtupels bestehend aus absoluten Drehwinkel der unteren Lenkwelle Xk0, als Mittelwert der beiden gemessenen Drehwinkel Xt1a und Xt1b, und Rotorwinkel Yk0, als Mittelwert der beiden gemessenen Rotorwinkel Ya und Yb

j) Einspeichern des Messtupels Xk0, Yk0 als Kalibrationsdatensatz in ein Mittel 29 (vergleich Figuren 10 bis 13) zur Speicherung und Einspeicherung des Wertes Null (0) als aktuellen Umdrehungszahlwert N in eine Speichereinheit.

Zur Bestimmung weiterer Kalibrationsdatensätze kann es vorgesehen sein, dass nach Abspeichern eines ersten Messtupels (Xk0, Yk0) folgende weitere Schritte ein oder mehrmals ausgeführt werden:

a) Erneutes Antreiben des Elektromotors 2 zur Verstellung der Drehlage der unteren Lenkwelle 4 in eine erste Richtung;

b) Fortwährendes Messen eines Rotorwinkels Yt der Drehlage des Rotors mit einem Rotorlagesensor 7;

c) Fortwährendes Messen des Drehwinkels Xt1 der absoluten Drehlage der unteren Lenkwelle 4 mit einer Lenkwinkelsensoreinheit 10, wobei der Drehwinkel Xt1 mit einem Getriebe mit einem Übersetzungsfaktor UF abgetastet wird;

d) Bei Erreichen eines vordefinierten Differenzwinkels: Abspeichern des Messwertepaares aus Rotorwinkel Xt1ia, Yia;

e) Antreiben des Elektromotors 2 zur Verstellung der Drehlage der unteren Lenkwelle 4 in eine zweite Richtung;

f) Fortwährendes Messen eines Rotorwinkels Yt der Drehlage des Rotors mit einem Rotorlagesensor 7;

g) Fortwährendes Messen des Drehwinkels Xt1 der absoluten Drehlage der unteren Lenkwelle 4 mit einer Lenkwinkelsensoreinheit 10, wobei der Drehwinkel Xt1 mit einem Getriebe mit einem Übersetzungsfaktor UF abgetastet wird;

h) Bei Änderung des Drehwinkels Xt1 gegenüber dem unmittelbar zuvor gemessenen Wert: Abspeichern des Messwertepaares aus Rotorwinkel Xt1ib, Yib;

i) Bildung eines Messtupels bestehend aus absoluten Drehwinkel der Lenkwelle Xk, als Mittelwert der beiden gemessenen Drehwinkel Xt1a und Xt1b, und Rotorwinkel Yk, als Mittelwert der beiden gemessenen Rotorwinkel Ya und Yb;

j) Einspeichern des Messtupels Xk, Yk als Kalibrationsdatensatz in ein Mittel 29 zur Speicherung.

Zur Nutzung des Verfahrens zur Messung eines hochgenauen absoluten Drehwinkels, bei dem die Drehrichtung genutzt wird, kann die Kalibrierung mit einem Verfahren durchgeführt werden, das folgende Schritte umfasst:

a) Antreiben des Elektromotors 2 zur Verstellung der Drehlage der unteren Lenkwelle 4 in eine erste Drehrichtung;

b) Fortwährendes Messen eines Rotorwinkels Yt der Drehlage des Rotors mit einem Rotorlagesensor 7 mit einem Abtastintervall;

c) Fortwährendes Messen des Drehwinkels Xt1 der absoluten Drehlage der unteren Lenkwelle 4 mit der Lenkwinkelsensoreinheit 10, wobei der Drehwinkel Xt1 mit einem Getriebe mit einem Übersetzungsfaktor UF abgetastet wird und, wobei die Abtastung mit genannten Abtastintervall erfolgt;

d) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ia, Yia als erstes Kalibrationsdatensatz für die erste Drehrichtung;

e) Einspeichern des Wertes Null (0) als aktuellen Umdrehungszahlwert Na in eine Speichereinheit zum zughörigen ersten Kalibrationsdatensatz für die erste Drehrichtung;

f) Antreiben des Elektromotors 2 zur Verstellung der Drehlage der unteren Lenkwelle 4 in eine zweite Drehrichtung;

g) Fortwährendes Messen eines Rotorwinkels Yt der Drehlage des Rotors mit einem Rotorlagesensor 7 mit dem vorgenannten Abtastintervall;

h) Fortwährendes Messen des Drehwinkels Xt1 der absoluten Drehlage der unteren Lenkwelle 4 mit der Lenkwinkelsensoreinheit 10, wobei der Drehwinkel Xt1 mit einem Getriebe mit einem Übersetzungsfaktor UF abgetastet wird;

i) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ib, Yib als erster Kalibrationsdatensatz für die zweite Drehrichtung;

j) Einspeichern des Wertes Null (0) als aktuellen Umdrehungszahlwert Nb in eine Speichereinheit zum zughörigen zweiten Kalibrationsdatensatz für die zweite Drehrichtung.

In der Figur 8 ist auch die Möglichkeit der Bestimmung des Umdrehungszahlwertes N veranschaulicht. Bei einer Vergrößerung des Rotorwinkels Yt von einem Zeitschritt des Abtastintervalls zum nächsten Zeitschritt um einen Betrag |ΔYt| von mehr als 80° wird der eingespeicherte Umdrehungszahlwert um eine Zählung erhöht (N=N+1) und als aktueller Umdrehungszahlwert N abgespeichert. Bei Verkleinerung des Rotorwinkels Xt von einem Zeitschritt des Abtastintervalls zum nächsten Zeitschritt um einen Betrag |ΔYt| von mehr als +80° wird der eingespeicherte Umdrehungszahlwert um eine Zählung reduziert (N=N-1) und als aktueller Umdrehungszahlwert N abgespeichert. Wie am Beispiel zu sehen wird der Sprung |ΔYt| in der Regel wesentlich größer als 80° betragen.

In den Figuren 10 bis 13 sind verschiedene Ausführungsformen des Lenksystems veranschaulicht.

Eine von einem Fahrer über ein Lenkrad 50 in die obere Lenkwelle 3 eingebrachte Lenkbewegung wird über den Drehstab 5 in die untere Lenkwelle 4 übertragen. Dabei wird zumindest der absolute Drehwinkel Xt1 der unteren Lenkwelle 4 in der Lenkwinkelsensoreinheit 10 bestimmt und an die Auswerteeinheit 28 übertragen. Eine Stromversorgung 31 wird über den Zündschalter 30 mit der Steuerung der Auswerteeinheit 28 schaltbar verbunden. Die Servoeinheit 40 mit dem Elektromotor 2 wird von der Steuerung angesteuert, so dass die Lenkbewegung des Fahrers unterstützt wird, wobei die Zahnstange 32 linear bewegt wird und das Verschwenken der Räder unterstützt erfolgt.

Der Steuerung wird zumindest der gemessene Rotorwinkel Yt zugeführt.

Mittel 29 dienen zur Speicherung von Kalibrationsdaten wie den Kalibrationsdatensätzen Xk1, Yk1 bzw. der Messtupel Xk, Yk und/oder den aktuellen Umdrehungszahlwerten N.

In einem Addierer 281 werden die entsprechenden Addier- oder Subtraktionsaufgaben ausgeführt.

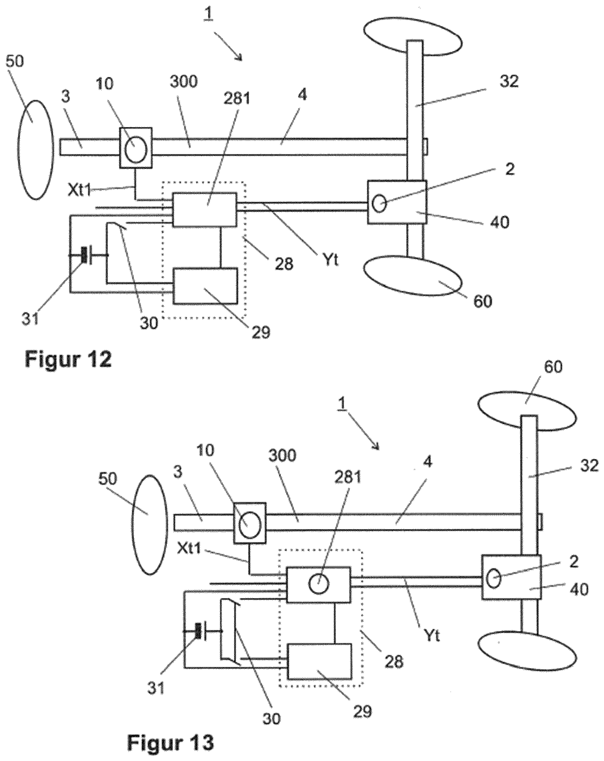

Das erfindungsgemäße Lenksystem kann Mittel 29 aufweisen, die ununterbrochen mit Strom versorgt werden, wie in Figuren 10 und 12 dargestellt. In diesem Fall stehen die Kalibrationsdaten stets zur Verfügung. Allerdings gibt es immer einen Stromverbrauch.

Alternativ kann das erfindungsgemäße Lenksystem Mittel 29 aufweisen, die nur zeitweise, bei eingeschalteter Zündung, mit Strom versorgt werden, wie in Figuren 11 und 13 dargestellt. In diesem Fall stehen die Kalibrationsdaten nicht stets zur Verfügung. Je nach Ausführung können die Daten bei jedem Ausschalten der Zündung oder erst nach einer gewissen Zeit verloren gehen. Der Vorteil besteht dann allerdings in dem geringeren Ruhestrombedarf.

In diesem Fall muss jedes Mal ein Kalibriervorgang neu gestartet werden. Wird das System gestartet (beispielsweise die Zündung eingeschaltet), so erfolgt ein kurzer Antrieb des Elektromotors um eine kleine Verdrehung (wenige Grad) der Lenkwelle zu bewirken, wobei zumindest ein Tupel bevorzugt zwei der Xk,Yk-Messtupel überstrichen werden und eingespeichert werden, so dass der hochgenaue absolute Lenkwinkel unmittelbar wieder abgeleitet werden kann.

Mit besonderem Vorteil kann auf den Einsatz einer Messung des Drehwinkels Xt der Lenkwelle bei ausgeschalteter Zündung verzichtet werden. Ein entsprechender Sleep-Mode ist nicht erforderlich. Durch das sehr einfache und sehr schnelle Verfahren zum Kalibrieren des Messsystems kann bei jedem Einschalten der Zündung die Kalibrierung unmittelbar erfolgen, so dass spätestens nach wenigen gefahrenen Metern (weniger als 10m) bereits eine hochgenaue absolute Drehwinkelmessung des Lenkwinkels verfügbar ist. Der Kalibrationsvorgang kann direkt auch im Stand innerhalb weniger Sekunden (weniger als 10s) ausgeführt werden.

Entsprechend den Figuren 10 und 11 kann das Getriebe zur Darstellung der Servounterstützung wie in den Figuren 1 bis 4 veranschaulicht als Schneckenradgetriebe ausgebildet sein.

Alternativ kann, wie in den Figuren 12 und 13 veranschaulicht auch direkt die Zahnstange 32 angetrieben werden, so dass das Getriebe beispielsweise als Kugelgewindetrieb ausgebildet sein kann.

Die erfindungsgemäße Ermittlung des absoluten Lenkwinkels kann in allen Arten elektromechanischer Servolenkungen eingesetzt werden. Dabei ist die Anordnung der Lenkwinkelsensoreinheit nicht auf die integrale Form mit der Drehmomentsensoreinheit beschränkt, vielmehr handelt es sich hierbei um eine bevorzugte Ausgestaltung.

Das erfindungsgemäße System zur Bestimmung des hochgenauen Absolutlenkwinkels einer Lenkwelle in einem elektromechanischen Hilfskraftlenkung ist aufgrund der geringen Teilevielfalt besonders einfach und kostengünstig im Aufbau und kann durch die Verwertung des Rotorpositionssignals einfach und sehr genau kalibriert werden.

## Patentansprüche

**1.** Elektromechanische Hilfskraftlenkung (1) für ein Kraftfahrzeug, umfassend

• eine Lenkwelle (300) die drehbar um eine Lenkwellendrehachse (301) gelagert ist und verschiedene Drehlagen einnehmen kann,
• einen Elektromotor (2) mit einem Rotor, dessen Drehung in die Hilfskraftlenkung eingekoppelt wird und einem Rotorlagesensor (7) zur Messung eines Rotorwinkels Yt des Rotors,
• eine Lenkwinkelsensoreinheit (10) zur Messung des absoluten Drehwinkels Xt1 der Drehlage der Lenkwelle (300) im Vergleich zu einer vordefinierten Ausgangsdrehlage,

**dadurch gekennzeichnet, dass** die Hilfskraftlenkung weiter umfasst:

• eine Auswerteeinheit (28) zur Kombination des Rotorwinkels Yt mit dem absoluten Drehwinkel Xt1 zur Bestimmung eines hochgenauen absoluten Drehwinkels Xt der Drehlage der Lenkwelle,
• wobei die Auswerteeinheit (28) Mittel (29) zur Speicherung von mindestens zwei Messtupeln umfasst, wobei jedes Messtupel einen Winkelwert eines Rotorwinkels Yk und einen Winkelwert eines zugehörigen absoluten Drehwinkels Xk der Drehlage der Lenkwelle (300) umfasst,
• wobei die Auswerteeinheit (28) einen Addierer (281) zur Berechnung des hochgenauen absoluten Drehwinkels Xt der Drehlage der Lenkwelle umfasst, der ausgehend von einem gespeicherten Messtupel (Xk, Yk) durch Addition oder Subtraktion des gemessenen Rotorwinkels Yt den hochgenauen absoluten Drehwinkel Xt der Drehlage der Lenkwelle (300) bestimmen kann.

**2.** Elektromechanische Hilfskraftlenkung nach Anspruch 1 **dadurch gekennzeichnet, dass** eine um die Lenkwellendrehachse (301) umlaufende nach außen gerichtete erste Verzahnung (202) vorgesehen ist, die mit der Lenkwelle drehfest gekoppelt ist und ein zweites Zahnrad (21) vorgesehen ist, das um eine zweite Zahnradachse (211) drehbar gelagert ist, mit einer um die zweite Zahnradachse (211) umlaufenden nach außen gerichteten zweiten Verzahnung (212) vorgesehen ist, wobei die zweite Zahnradachse (211) parallel und beabstandet zur Lenkwellendrehachse (301) angeordnet ist und die erste Verzahnung (202) und die zweite Verzahnung (212) in Eingriff miteinander stehen.

3. Elektromechanische Hilfskraftlenkung nach Anspruch 2, **dadurch gekennzeichnet, dass** ein drittes Zahnrad (23) vorgesehen ist, das um eine dritte Zahnradachse (231) drehbar gelagert ist, mit einer nach außen gerichteten um die dritte Zahnradachse (231) umlaufenden dritten Verzahnung (232), wobei die dritte Zahnradachse (231) parallel und beabstandet zur Lenkwellendrehachse (301) und parallel beabstandet zur zweiten Zahnradachse (211) angeordnet ist.

4. Elektromechanische Hilfskraftlenkung nach einem der vorhergehenden Ansprüche, **dadurch gekennzeichnet, dass** ein magnetisches Substrat (25) vorgesehen ist, das mit dem dritten Zahnrad (23) drehfest verbunden oder integral das dritte Zahnrad (23) bildet, wobei dessen Drehlage durch ein Sensorelement (19) abtastbar ist.

5. Elektromechanische Hilfskraftlenkung nach einem der Ansprüche 2 bis 4, **dadurch gekennzeichnet, dass** das dritte Zahnrad (23) im zweiten Zahnrad (21) teilweise aufgenommen und drehbar um die dritte Zahnradachse (231) gelagert ist.

6. Elektromechanische Hilfskraftlenkung nach einem der Ansprüche 2 bis 5, **dadurch gekennzeichnet, dass** ein viertes Zahnrad (24) vorgesehen ist, dass eine nach innen gerichtete um die zweite Zahnradachse (211) und dritte Zahnradachse (231) umlaufende vierte Verzahnung (242) aufweist, die mit der dritten Verzahnung (232) in Eingriff steht.

7. Elektromechanische Hilfskraftlenkung nach einem der Ansprüche 2 bis 6, **dadurch gekennzeichnet, dass** die vierte Verzahnung (242) in ihrer Drehlage in Bezug auf die Lenkwellenachse (301) und die zweite Zahnradachse (211) und die dritte Zahnradachse (231) ruht und unverschieblich angeordnet ist.

8. Elektromechanische Hilfskraftlenkung nach einem der Ansprüche 6 oder 7 **dadurch gekennzeichnet, dass** zur Bestimmung des hochgenauen Drehwinkels Xt maximal die oben aufgeführten Zahnräder und die Einkopplung der Drehung des Rotors in die Hilfskraftlenkung im System enthalten sind.

9. Elektromechanische Hilfskraftlenkung nach einem der vorhergehenden Ansprüche, **dadurch gekennzeichnet, dass** die Lenkwinkelsensoreinheit (10) mit einer Drehmomentsensoreinheit (9) zur Bestimmung des in die Lenkwelle von einem Fahrer eingebrachten Drehmomentes der Lenkwelle (300) in einer integralen Baueinheit vorgesehen ist.

10. Verfahren zur Bestimmung eines hochgenauen absoluten Drehwinkels Xt der Drehlage einer drehbar gelagerten Lenkwelle (300), wobei die Drehung eines Rotors eines Elektromotors (2) in die Drehung der Lenkwelle (300) mit einem Getriebe (6, 40) mit einem Getriebeübersetzungsfaktor K zur Hilfskraftunterstützung in die Drehung der Lenkwelle (300) eingekoppelt wird, umfassend folgende Schritte:

   a) Messen eines Rotorwinkels Yt der Drehlage des Rotors mit einem Rotorlagesensor (7);
   b) Auslesen eines gespeicherten aktuellen Umdrehungszahlwert N des Rotors in Bezug zu einem Anfangswert des Rotorwinkels Yk0 mit einem zugehörigen Anfangswert des Drehwinkels Xk0, wobei die Werte in einem Kalibrierverfahren bestimmt worden sind;
   c) Berechnung des hochgenauen Absolutwertes des Drehwinkels Xt der Lenkwelle (300) nach der Gleichung:

$$Xt = Xk0 + (Yt-Yk0)/K + N*360°/K.$$

11. Verfahren zur Bestimmung eines hochgenauen absoluten Drehwinkels Xt der Drehlage einer drehbar gelagerten Lenkwelle (300), wobei die Drehung eines Rotors eines Elektromotors (2) in die Drehung der Lenkwelle (300) mit einem Getriebe mit einem Getriebeübersetzungsfaktor K zur Hilfskraftunterstützung in die Drehung der Lenkwelle (300) eingekoppelt wird, umfassend folgende Schritte:

   a) Messen eines Rotorwinkels Yt der Drehlage des Rotors mit einem Rotorlagesensor (7);
   b) Messen des Drehwinkels Xt1 der absoluten Drehlage der Lenkwelle (300) mit einer Lenkwinkelsensoreinheit (10), wobei der Drehwinkel Xt1 mit einem Getriebe mit einem Übersetzungsfaktor UF abgetastet wird;
   c) Auswahl aus einer Menge von vorbestimmten Kalibrationsdatensätzen (Messtupel), bestehend jeweils aus einem gemessenen Drehwinkel Xk und einem zugehörigen gemessenen Rotorwinkel Yk, eines zum aktuellen Messwert des Drehwinkels Xt1 am dichtesten gelegenen Kalibrationsdatensatz Xk1, Yk1;
   d) Bestimmung der Anzahl der Umdrehungen N1 des Rotors, die erfolgt sind, um vom Drehwinkel der Lenkwelle aus dem Kalibrationsdatensatz Xk1 zum aktuell gemessenen Drehwinkel Xt1 der Lenkwelle zu gelangen;

e) Berechnung des hochgenauen Absolutwertes des Drehwinkels der Lenkwelle nach der Gleichung:

$$Xt=Xk1 + ((Xt1-Xk1)/(|Xt1-Xk1|) *(|Yt-Yk1|)/K) +N1*360°/K.$$

12. Verfahren zur Kalibrierung einer Messeinrichtung zur Messung eines hochgenauen absoluten Drehwinkels Xt der Drehlage einer drehbar gelagerten Lenkwelle (300), wobei die Drehung eines Rotors eines Elektromotors (2) in die Drehung der Lenkwelle (300) mit einem Getriebe mit einem Getriebeübersetzungsfaktor K zur Hilfskraftunterstützung in die Drehung der Lenkwelle (300) eingekoppelt wird, umfassend folgende Schritte:

a) Antreiben des Elektromotors (2) zur Verstellung der Drehlage der Lenkwelle (300) in eine erste Richtung;
b) Fortwährendes Messen eines Rotorwinkels Yt der Drehlage des Rotors mit einem Rotorlagesensor (7) mit einem Abtastintervall;
c) Fortwährendes Messen des Drehwinkels Xt1 der absoluten Drehlage der Lenkwelle (300) mit einer Lenkwinkelsensoreinheit (10), wobei der Drehwinkel Xt1 mit einem Getriebe mit einem Übersetzungsfaktor UF abgetastet wird und, wobei die Abtastung mit genannten Abtastintervall erfolgt;
d) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ia, Yia;
e) Antreiben des Elektromotors (2) zur Verstellung der Drehlage der Lenkwelle (300) in eine zweite Richtung;
f) Fortwährendes Messen eines Rotorwinkels Yt der Drehlage des Rotors mit einem Rotorlagesensor (7) mit dem vorgenannten Abtastintervall;
g) Fortwährendes Messen des Drehwinkels Xt1 der absoluten Drehlage der Lenkwelle (300) mit einer Lenkwinkelsensoreinheit (10), wobei der Drehwinkel Xt1 mit einem Getriebe mit einem Übersetzungsfaktor UF abgetastet wird;
h) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ib, Yib;
i) Bildung eines Messtupels bestehend aus absoluten Drehwinkel der Lenkwelle Xk0, als Mittelwert der beiden gemessenen Drehwinkel Xt1a und Xt1b, und Rotorwinkel Yk0, als Mittelwert der beiden gemessenen Rotorwinkel Ya und Yb
j) Einspeichern des Messtupels Xk0, Yk0 in ein Mittel (29) zur Speicherung und Einspeicherung des Wertes Null als aktuellen Umdrehungszahlwert N in eine Speichereinheit.

13. Verfahren zur Kalibrierung eines hochgenauen absoluten Drehwinkels Xt nach Anspruch 12, **dadurch gekennzeichnet, dass** nach Abspeichern eines ersten Messtupels Xk0, Yk0 folgende weitere Schritte ein oder mehrmals ausgeführt werden:

a) erneutes Antreiben des Elektromotors (2) zur Verstellung der Drehlage der Lenkwelle (300) in eine erste Richtung;
b) Fortwährendes Messen eines Rotorwinkels Yt der Drehlage des Rotors mit einem Rotorlagesensor (7);
c) Fortwährendes Messen des Drehwinkels Xt1 der absoluten Drehlage der Lenkwelle (300) mit einer Lenkwinkelsensoreinheit (10), wobei der Drehwinkel Xt1 mit einem Getriebe mit einem Übersetzungsfaktor UF abgetastet wird;
d) Bei Erreichen eines vordefinierten Differenzwinkels Abspeichern des Messwertepaares aus Rotorwinkel Xt1ia, Yia;
e) Antreiben des Elektromotors (2) zur Verstellung der Drehlage der Lenkwelle (300) in eine zweite Richtung;
f) Fortwährendes Messen eines Rotorwinkels Yt der Drehlage des Rotors mit einem Rotorlagesensor (7);
g) Fortwährendes Messen des Drehwinkels Xt1 der absoluten Drehlage der Lenkwelle (300) mit einer Lenkwinkelsensoreinheit (10), wobei der Drehwinkel Xt1 mit einem Getriebe mit einem Übersetzungsfaktor UF abgetastet wird;
h) Bei Änderung des Drehwinkels Xt1 gegenüber dem unmittelbar zuvor gemessenen Wert Abspeichern des Messwertepaares aus Rotorwinkel Xt1ib, Yib;
i) Bildung eines Messtupels bestehend aus absoluten Drehwinkel der Lenkwelle Xk, als Mittelwert der beiden gemessenen Drehwinkel Xt1a und Xt1b, und Rotorwinkel Yk, als Mittelwert der beiden gemessenen Rotorwinkel Ya und Yb
j) Einspeichern des Messtupels Xk, Yk in ein Mittel (29) zur Speicherung.

**14.** Verfahren zur Kalibrierung einer Messeinrichtung zur Messung eines hochgenauen absoluten Drehwinkels Xt der Drehlage einer drehbar gelagerten Lenkwelle (300), wobei die Drehung eines Rotors eines Elektromotors (2) in die Drehung der Lenkwelle (300) mit einem Getriebe mit einem Getriebeübersetzungsfaktor K zur Hilfskraftunterstützung in die Drehung der Lenkwelle (300) eingekoppelt wird, umfassend folgende Schritte:

a) Antreiben des Elektromotors (2) zur Verstellung der Drehlage der Lenkwelle (300) in eine erste Richtung;
b) Fortwährendes Messen eines Rotorwinkels Yt der Drehlage des Rotors mit einem Rotorlagesensor (7) mit einem Abtastintervall;
c) Fortwährendes Messen des Drehwinkels Xt1 der absoluten Drehlage der Lenkwelle (300) mit einer Lenkwinkelsensoreinheit (10), wobei der Drehwinkel Xt1 mit einem Getriebe mit einem Übersetzungsfaktor UF abgetastet wird und, wobei die Abtastung mit genannten Abtastintervall erfolgt;
d) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ia, Yia als erstes Kalibrationstupel;
e) Einspeichern des Wertes Null als aktuellen Umdrehungszahlwert Na in eine Speichereinheit zum zughörigen ersten Kalibrationstupel
f) Antreiben des Elektromotors (2) zur Verstellung der Drehlage der Lenkwelle (300) in eine zweite Richtung;
g) Fortwährendes Messen eines Rotorwinkels Yt der Drehlage des Rotors mit einem Rotorlagesensor (7) mit dem vorgenannten Abtastintervall;
h) Fortwährendes Messen des Drehwinkels Xt1 der absoluten Drehlage der Lenkwelle (300) mit einer Lenkwinkelsensoreinheit (10), wobei der Drehwinkel Xt1 mit einem Getriebe mit einem Übersetzungsfaktor UF abgetastet wird;
i) Bei Änderung des Drehwinkels Xt1 gegenüber dem im unmittelbar zuvor liegenden Abtastzeitpunkt gemessenen Wert Abspeichern des Messwertepaares aus Rotorwinkel Xt1ib, Yib als zweites Kalibrationstupel;
j) Einspeichern des Wertes Null als aktuellen Umdrehungszahlwert Nb in eine Speichereinheit zum zughörigen zweiten Kalibrationstupel.

**15.** Verfahren zur Kalibrierung einer Messeinrichtung nach Anspruch 11 bis 13 **dadurch gekennzeichnet, dass** das Verfahren weiter folgende Schritte umfasst:

a) Fortwährendes Messen des Rotorwinkels Yt mit dem genannten Abtastintervall;
b) Bei Vergrößerung des Rotorwinkels Yt von einem Zeitschritt des Abtastintervalls zum nächsten Zeitschritt um einen Betrag von mehr als 80° wird der eingespeicherte Umdrehungszahlwert um eine Zählung erhöht und als aktueller Umdrehungszahlwert N abgespeichert;
c) Bei Verkleinerung des Rotorwinkels Yt von einem Zeitschritt des Abtastintervalls zum nächsten Zeitschritt um einen Betrag von mehr als +80° wird der eingespeicherte Umdrehungszahlwert um eine Zählung reduziert und als aktueller Umdrehungszahlwert N abgespeichert.

**Claims**

**1.** Electromechanical power steering system (1) for a motor vehicle, comprising

• a steering shaft (300), which is pivot-mounted around a steering shaft axis of rotation (301) and can assume various rotational positions,
• an electric motor (2) with a rotor, the rotation of which is coupled into the power steering system and a rotor position sensor (7) for measuring a rotor angle Yt of the rotor,
• a steering angle sensor unit (10) for the measurement of the absolute angle of rotation Xt1 of the rotational position of the steering shaft (300) in comparison to a predefined output rotational position,

**characterized in that** the power steering system furthermore comprises:

• an evaluation unit (28) for combining the rotor angle Yt with the absolute angle of rotation Xt1 to determine a highly accurate absolute angle of rotation Xt of the rotational position of the steering shaft,
• wherein the evaluation unit (28) comprises means (29) to store at least two measurement tuples, wherein each measurement tuple comprises an angle value of a rotor angle Yk and an angle value of a related absolute angle of rotation Xk of the rotational position of the steering shaft (300),
• wherein the evaluation unit (28) comprises an adder (281) to calculate the highly accurate absolute angle of rotation Xt of the rotational position of the steering shaft, which can determine the highly accurate absolute angle of rotation Xt of the rotational position of the steering shaft (300) based on a stored measurement tuple (Xk, Yk) by means of adding or subtracting the measured rotor angle Yt.

2. Electromechanical power steering system according to Claim 1, **characterized in that** a first toothing (202) is provided which faces outwardly and runs circumferentially around the steering shaft axis of rotation (301), which is coupled to the steering shaft in a torsion-proof manner, and a second gear (21) is provided, which is pivot-mounted around a second gear axis (211), with a second toothing (212) is provided, which faces outwardly and runs circumferentially around the second gear axis (211), wherein the second gear axis (211) is arranged in parallel to and spaced away from the steering shaft axis of rotation (301) and the first toothing (202) and the second toothing (212) mesh with one another.

3. Electromechanical power steering system according to Claim 2, **characterized in that** a third gear (23) is provided that is pivot-mounted around a third gear axis (231) with a third toothing (232) facing outwardly and running circumferentially around the third gear axis (231), wherein the third gear axis (231) is arranged in parallel to and spaced away from the steering shaft axis of rotation (301) and arranged in parallel to and spaced away from the second gear axis (211).

4. Electromechanical power steering system according to any one of the preceding claims, **characterized in that** a magnetic substrate (25) is provided that is connected to the third gear (23) in a torsion-proof manner or integrally forms the third gear (23), wherein its rotational position can be detected by means of a sensor element (19).

5. Electromechanical power steering system according to one of Claims 2 to 4, **characterized in that** the third gear (23) is partially accommodated within the second gear (21) and pivot-mounted around the third gear axis (231).

6. Electromechanical power steering system according to one of Claims 2 to 5, **characterized in that** a fourth gear (24) is provided that comprises a fourth toothing (242) that faces inwardly and runs circumferentially around the second gear axis (211) and the third gear axis (231), which meshes with the third toothing (232).

7. Electromechanical power steering system according to one of Claims 2 to 6, **characterized in that** the fourth toothing (242) is arranged in its rotational position with reference to the steering shaft axis (301) and the second gear axis (211) and the third gear axis (231) in a resting and unmovable manner.

8. Electromechanical power steering system according to one of Claims 6 and 7, **characterized in that** the aforementioned gears and the coupling of the rotation of the rotor into the power steering system are contained in the system as a maximum to determine the highly accurate angle of rotation Xt.

9. Electromechanical power steering system according to any one of the preceding claims, **characterized in that** the steering angle sensor unit (10) with a torque sensor unit (9) is provided to determine the torque of the steering shaft (300) introduced into the steering shaft by a driver in an integral construction unit.

10. Method for determining a highly accurate absolute angle of rotation Xt of the rotational position of a pivot-mounted steering shaft (300), wherein the rotation of a rotor of an electric motor (2) with a gearing (6, 40) with a gearing transmission factor K for power assistance is coupled into the rotation of the steering shaft (300) into the rotation of the steering shaft (300), comprising the following steps:

a) Measuring a rotor angle Yt of the rotational position of the rotor with a rotor position sensor (7);
b) Reading of a stored current revolution number value N of the rotor with reference to an initial value of the rotor angle Yk0 with a corresponding initial value of the angle of rotation Xk0, wherein the values have been determined within a calibration process;
c) Calculation of the highly accurate absolute value of the angle of rotation Xt of the steering shaft (300) according to the equation:

$$Xt = Xk0 + (Yt-Yk0)/K + N*360°/K.$$

11. Method for determining a highly accurate absolute angle of rotation Xt of the rotational position of a pivot-mounted steering shaft (300), wherein the rotation of a rotor of an electric motor (2) with a gearing with a gearing transmission factor K for power assistance is coupled into the rotation of the steering shaft (300) into the rotation of the steering shaft (300), comprising the following steps:

a) Measuring a rotor angle Yt of the rotational position of the rotor with a rotor position sensor (7);

b) Measurement of the angle of rotation Xt1 of the absolute rotational position of the steering shaft (300) using a steering angle sensor unit (10), wherein the angle of rotation Xt1 is detected with a gearing with a transmission factor UF;

c) Selection of an amount of predetermined calibration datasets (measurement tuples), respectively comprising a measured angle of rotation Xk and a related measured rotor angle Yk, a calibration dataset Xk1, Yk1 closest to the currently measured value of the angle of rotation Xt1;

d) Determination of the number of revolutions N1 of the rotor, which have taken place in order to arrive from the angle of rotation of the steering shaft from the calibration dataset Xk1 to the currently measured angle of rotation Xt1 of the steering shaft;

e) Calculation of the highly accurate absolute value of the angle of rotation of the steering shaft according to the equation:

$$Xt=Xk1 + ((Xt1-Xk1)/(|Xt1-Xk1|) *(|Yt-Yk1|)/K) +N1*360°/K.$$

12. Method for calibrating a measurement device for measuring a highly accurate absolute angle of rotation Xt of the rotational position of a pivot-mounted steering shaft (300), wherein the rotation of a rotor of an electric motor (2) with a gearing with a gearing transmission factor K for power assistance is coupled into the rotation of the steering shaft (300) into the rotation of the steering shaft (300), comprising the following steps:

a) Powering the electric motor (2) to shift the rotational position of the steering shaft (300) into a first direction;

b) Continuous measuring of a rotor angle Yt of the rotational position of the rotor with a rotor position sensor (7) with a detection interval;

c) Continuous measurement of the angle of rotation Xt1 of the absolute rotational position of the steering shaft (300) using a steering angle sensor unit (10), wherein the angle of rotation Xt1 is detected with a gearing with a transmission factor UF and wherein the detection takes place at the mentioned detection interval;

d) In the case of the angle of rotation Xt1 changing in relation to the value measured at the detection point directly beforehand, saving the measurement value pair from the rotor angle Xt1ia, Yia;

e) Powering the electric motor (2) to shift the rotational position of the steering shaft (300) into a second direction;

f) Continuous measuring of a rotor angle Yt of the rotational position of the rotor with a rotor position sensor (7) at the aforementioned detection interval;

g) Continuous measurement of the angle of rotation Xt1 of the absolute rotational position of the steering shaft (300) using a steering angle sensor unit (10), wherein the angle of rotation Xt1 is detected with a gearing with a transmission factor UF;

h) In the case of the angle of rotation Xt1 changing in relation to the value measured at the detection point directly beforehand, saving the measurement value pair from the rotor angle Xt1ib, Y1b;

i) Formation of a measurement tuple comprising an absolute angle of rotation of the steering shaft Xk0 as an average of both measured angles of rotation Xt1a and Xt1b, and a rotor angle Yk0 as an average of both measured rotor angles Ya and Yb;

j) Saving of the measurement tuple Xk0, Yk0 on a storage means (29) and saving the value zero as a current revolution number value N into a memory unit.

13. Method for calibrating a highly accurate absolute angle of rotation Xt according to Claim 12, **characterized in that**, after saving a first measurement tuple Xk0, Yk0, the following further steps are carried out a single time or several times:

a) Re-powering the electric motor (2) to shift the rotational position of the steering shaft (300) into a first direction;

b) Continuous measuring of a rotor angle Yt of the rotational position of the rotor with a rotor position sensor (7);

c) Continuous measurement of the angle of rotation Xt1 of the absolute rotational position of the steering shaft (300) using a steering angle sensor unit (10), wherein the angle of rotation Xt1 is detected with a gearing with a transmission factor UF;

d) Upon reaching a predefined differential angle, saving the measurement value pair from the rotor angle Xt1ia, Yia;

e) Powering the electric motor (2) to shift the rotational position of the steering shaft (300) into a second direction;

f) Continuous measuring of a rotor angle Yt of the rotational position of the rotor using the rotor position sensor (7);

g) Continuous measurement of the angle of rotation Xt1 of the absolute rotational position of the steering shaft (300) using a steering angle sensor unit (10), wherein the angle of rotation Xt1 is detected with a gearing with a transmission factor UF;

h) In the case of the angle of rotation Xt1 changing in relation to the value measured directly beforehand, saving the measurement value pair from the rotor angle Xt1ib, Yib;

i) Formation of a measurement tuple comprising an absolute angle of rotation of the steering shaft Xk as an average of both measured angles of rotation Xt1a and Xt1b, and a rotor angle Yk as an average of both measured rotor angles Ya and Yb;

j) Saving the measurement tuple, Xk, Yk, on a storage means (29).

14. Method for calibrating a measurement device to measure a highly accurate absolute angle of rotation Xt of the rotational position of a pivot-mounted steering shaft (300), wherein the rotation of a rotor of an electric motor (2) with a gearing with a gearing transmission factor K for power assistance is coupled into the rotation of the steering shaft (300) into the rotation of the steering shaft (300), comprising the following steps:

a) Powering the electric motor (2) to shift the rotational position of the steering shaft (300) into a first direction;

b) Continuous measuring of a rotor angle Yt of the rotational position of the rotor with a rotor position sensor (7) with a detection interval;

c) Continuous measurement of the angle of rotation Xt1 of the absolute rotational position of the steering shaft (300) using a steering angle sensor unit (10), wherein the angle of rotation Xt1 is detected with a gearing with a transmission factor UF and wherein the detection takes place at the mentioned detection interval;

d) In the case of the angle of rotation Xt1 changing in relation to the value measured at the detection point directly beforehand, saving the measurement value pair from the rotor angle Xt1ia, Yia as a first calibration tuple;

e) Saving of the value zero as a current revolution number value Na into a memory unit to the related first calibration tuple;

f) Powering the electric motor (2) to shift the rotational position of the steering shaft (300) into a second direction;

g) Continuous measuring of a rotor angle Yt of the rotational position of the rotor with a rotor position sensor (7) at the aforementioned detection interval;

h) Continuous measurement of the angle of rotation Xt1 of the absolute rotational position of the steering shaft (300) using a steering angle sensor unit (10), wherein the angle of rotation Xt1 is detected with a gearing with a transmission factor UF;

i) In the case of the angle of rotation Xt1 changing in relation to the value measured at the detection point directly beforehand, saving the measurement value pair from the rotor angle Xt1ib, Yib as a second calibration tuple;

j) Saving of the value zero as a current revolution number value Nb into a memory unit to the related second calibration tuple.

15. Method for calibrating a measurement device according to Claims 11 to 13, **characterized in that** the method furthermore comprises the following steps:

a) Continuous measuring of the rotor angle Yt with the aforementioned detection interval;

b) When the rotor angle Yt grows by an amount of more than 80° from one time step of the detection interval to the next time step, the saved revolution number value is increased by one count and saved as a current revolution number value N;

c) When the rotor angle Yt declines by an amount of more than +80° from one time step of the detection interval to the next time step, the saved revolution number value is decreased by one count and saved as a current revolution number value N.

## Revendications

1. Système de direction assistée électromécanique (1) destiné à un véhicule automobile, ledit système comprenant

• un arbre de direction (300) monté de manière à pouvoir tourner sur un axe de rotation de l'arbre de direction (301) et pouvant occuper différentes positions de rotation,

• un moteur électrique (2) comportant un rotor, dont la rotation est transmise par accouplement au système de direction assistée, et un capteur de position de rotor (7) destiné à mesurer un angle Yt du rotor,

• une unité de détection d'angle de direction (10) destinée à mesurer l'angle de rotation absolu Xt1 de la position de rotation de l'arbre de direction (300) par rapport à une position de rotation initiale prédéfinie, **caractérisé en ce que** le système de direction assistée

comprend en outre :

• une unité d'évaluation (28) destinée à combiner l'angle de rotor Yt à l'angle de rotation absolu Xt1 pour déterminer un angle de rotation absolu de haute précision Xt de la position de rotation de l'arbre de direction,
• l'unité d'évaluation (28) comprenant des moyens (29) destinés à mémoriser au moins deux couples de mesure, chaque couple de mesure comprenant une valeur d'un angle de rotor Yk et une valeur d'un angle de rotation absolu associé Xk de la position de rotation de l'arbre de direction (300),
• l'unité d'évaluation (28) comprenant un additionneur (281) destiné à calculer l'angle de rotation absolu de haute précision Xt de la position de rotation de l'arbre de direction, qui peut déterminer l'angle de rotation absolu de haute précision Xt de la position de rotation de l'arbre de direction (300) à partir d'un couple de mesure mémorisé (Xk, Yk) par addition ou soustraction de l'angle de rotor Yt mesuré.

2. Système de direction assistée électromécanique selon la revendication 1, **caractérisé en ce qu'**une première denture (202) orientée vers l'extérieur et tournant sur l'arbre de direction (301) est prévue qui est accouplée solidairement en rotation à l'arbre de direction et **en ce qu'**une deuxième roue dentée (21) est prévue qui est montée de façon à pouvoir tourner sur un deuxième axe de roue dentée (211) et qui est pourvue d'une deuxième denture (212) orientée vers l'extérieur et tournant sur le deuxième axe de roue dentée (211), le deuxième axe de roue dentée (211) étant disposé parallèlement à distance de l'axe de rotation de l'arbre de direction (301) et la première denture (202) et la deuxième denture (212) étant en engrènement l'une avec l'autre.

3. Système de direction assistée électromécanique selon la revendication 2, **caractérisé en ce qu'**une troisième roue dentée (23) est prévue qui est montée de façon à tourner sur un troisième axe de roue dentée (231) et qui est pourvue d'une troisième denture (232) orientée vers l'extérieur et tournant sur le troisième axe de roue dentée (231), le troisième axe de roue dentée (231) étant disposé parallèlement à distance de l'axe de rotation d'arbre de direction (301) et parallèlement à distance du deuxième axe de roue dentée (211) .

4. Système de direction assistée électromécanique selon l'une des revendications précédentes, **caractérisé en ce qu'**un substrat magnétique (25) est prévu qui est relié solidairement en rotation à la troisième roue dentée (23) ou forme de manière intégrée la troisième roue dentée (23), la position de rotation pouvant être balayée par un élément de détection (19).

5. Système de direction assistée électromécanique selon l'une des revendications 2 à 4, **caractérisé en ce que** la troisième roue dentée (23) est reçue partiellement dans la deuxième roue dentée (21) et est montée de manière à pouvoir tourner sur le troisième axe de roue dentée (231).

6. Système de direction assistée électromécanique selon l'une des revendications 2 à 5, **caractérisé en ce qu'**une quatrième roue dentée (24) est prévue qui comporte une quatrième denture (242) qui est orientée vers l'intérieur, qui tourne sur le deuxième axe de roue dentée (211) et le troisième axe de roue dentée (231) et qui s'engrène avec la troisième denture (232).

7. Système de direction assistée électromécanique selon l'une des revendications 2 à 6, **caractérisé en ce que** la quatrième denture (242) repose, dans sa position de rotation par rapport à l'axe de l'arbre de direction (301), sur le deuxième axe de roue dentée (211) et sur le troisième axe de roue dentée (231) et est disposée de manière fixe.

8. Système de direction assistée électromécanique selon l'une des revendications 6 et 7, **caractérisé en ce que**, pour déterminer l'angle de rotation de haute précision Xt, le système contient au maximum les roues dentées susmentionnées et la transmission de la rotation du rotor par accouplement dans le système de direction assistée.

9. Système de direction assistée électromécanique selon l'une des revendications précédentes, **caractérisé en ce que** l'unité de détection d'angle de direction (10) est pourvu d'une unité de détection de couple (9), destinée à déterminer le couple de l'arbre de direction (300) qui est communiqué par le conducteur à l'arbre de direction, dans une unité intégrée.

10. Procédé de détermination d'un angle de rotation absolu de haute précision Xt de la position de rotation d'un arbre de direction (300) monté de façon à pouvoir tourner, la rotation du rotor d'un moteur électrique (2) étant transmise par accouplement à la rotation de l'arbre de direction (300) à l'aide d'une transmission (6, 40) ayant un facteur de multiplication de transmission K pour assister la rotation de l'arbre de direction (300), le procédé comprenant les étapes suivantes :

a) mesurer un angle de rotor Yt de la position de rotation du rotor à l'aide d'un capteur de position de rotor (7) ;

b) lire une valeur de tours de rotation actuelle N mémorisée du rotor avec une valeur initiale de l'angle de rotor Yk0 avec une valeur initiale associée de l'angle de rotation Xk0, les valeurs ayant été déterminées lors d'une procédure d'étalonnage ;

c) calculer la valeur absolue de haute précision de l'angle de rotation Xt de l'arbre de direction (300) selon l'équation :

$$Xt=Xk0 + (Yt-Yk0)/K + N*360°/K.$$

11. Procédé de détermination d'un angle de rotation absolu de haute précision Xt de la position de rotation d'un arbre de direction (300) monté de manière à pouvoir tourner, la rotation du rotor de moteur électrique (2) étant transmise par accouplement à la rotation de l'arbre de direction (300) à l'aide d'une transmission ayant un facteur de multiplication de transmission K pour assister la rotation de l'arbre de direction (300), le procédé comprenant les étapes suivantes :

a) mesurer un angle de rotor Yt de la position de rotation du rotor à l'aide d'un capteur de position de rotor (7) ;

b) mesurer l'angle de rotation Xt1 de la position de rotation absolue de l'arbre de direction (300) à l'aide d'une unité de détection d'angle de direction (10), l'angle de rotation Xt1 étant balayé avec une transmission ayant un facteur de multiplication UF ;

c) sélectionner parmi une multitude d'ensembles de données d'étalonnage prédéterminés (couples de mesure), compenant chacun un angle de rotation mesuré Xk et un angle de rotor mesuré associé Yk, un ensemble de données d'étalonnage Xk1, Yk1 le plus proche de la valeur mesurée actuelle de l'angle de rotation Xt1 ;

d) déterminer le nombre de tours N1 du rotor qui sont effectués pour parvenir de l'angle de rotation de l'arbre de direction de l'ensemble de données d'étalonnage Xk1 à l'angle de rotation actuellement mesuré Xt1 de l'arbre de direction ;

e) calculer la valeur absolue de haute précision de l'angle de rotation de l'arbre de direction selon l'équation :

$$Xt=Xk1 + ((Xt1-Xk1)/(|Xt1-Xk1|) * (|Yt-Yk1|)/K) + N1*360°/K.$$

12. Procédé d'étalonnage d'un dispositif de mesure destiné à mesurer un angle de rotation absolu de haute précision Xt de la position de rotation d'un arbre de direction (300) monté de manière à pouvoir tourner, la rotation du rotor d'un moteur électrique (2) étant transmise par accouplement à la rotation de l'arbre de direction (300) à l'aide d'une transmission ayant un facteur de multiplication de transmission K pour assister la rotation de l'arbre de direction (300), le procédé comprenant les étapes suivantes :

a) entraîner le moteur électrique (2) pour régler la position de rotation de l'arbre de direction (300) dans un premier sens ;

b) mesurer en continu un angle de rotor Yt de la position de rotation du rotor à l'aide d'un capteur de position de rotor (7) avec un intervalle de balayage ;

c) mesurer en continu l'angle de rotation Xt1 de la position de rotation absolue de l'arbre de direction (300) à l'aide d'une unité de détection d'angle de direction (10), l'angle de rotation Xt1 étant balayé à l'aide d'une transmission ayant un facteur de multiplication UF et le balayage se faisant avec ledit intervalle de balayage ;

d) mémoriser la paire de valeurs de mesure à partir de l'angle du rotor Xt1ia, Yia lors de la variation de l'angle de rotation Xt1 par rapport à la valeur mesurée à l'instant de balayage immédiatement précédent ;

e) entraîner le moteur électrique (2) pour régler la position de rotation de l'arbre de direction (300) dans un deuxième sens ;

f) mesurer en continu un angle de rotor Yt de la position de rotation du rotor à l'aide d'un capteur de position de rotor (7) avec l'intervalle de balayage susmentionné ;

g) mesurer en continu l'angle de rotation Xt1 de la position de rotation absolue de l'arbre de direction (300) à l'aide d'une unité de détection d'angle de direction (10), l'angle de rotation Xt1 étant balayé à l'aide d'une transmission ayant un facteur de multiplication UF ;

h) mémoriser la paire de valeurs de mesure à partir de l'angle du rotor Xt1ib, Yib lors de la variation de l'angle de rotation Xt1 par rapport à la valeur mesurée à l'instant de balayage immédiatement précédent ;

i) former un couple de mesure comprenant un angle de rotation absolu Xk0 de l'arbre de direction, comme moyenne des deux angles de rotation mesurés Xt1a et Xt1b, et un angle de rotor Yk0 comme moyenne des deux angles de rotor mesurés Ya et Yb ;

j) mémoriser le couple de mesure Xk0, Yk0 dans un moyen (29) de mémorisation et mémoriser la valeur zéro en tant que valeur de nombre de tours actuelle N dans une unité de mémorisation.

13. Procédé d'étalonnage d'un angle de rotation absolu de haute précision Xt selon la revendication 12, **caractérisé en ce que**, après la mémorisation d'un premier couple de mesure Xk0, Yk0, les étapes supplémentaires suivantes sont effectuées une ou plusieurs fois :

a) entraîner à nouveau le moteur électrique (2) pour régler la position de rotation de l'arbre de direction (300) dans un premier sens ;

b) mesurer en continu un angle de rotor Yt de la position de rotation du rotor à l'aide d'un capteur de position de rotor (7) ;

c) mesurer en continu l'angle de rotation Xt1 de la position de rotation absolue de l'arbre de direction (300) à l'aide d'une unité de capteur d'angle de direction (10), l'angle de rotation Xt1 étant balayé à l'aide d'une transmission ayant un facteur de multiplication UF ;

d) mémoriser la paire de valeurs de mesure à partir de l'angle de rotor Xt1ia, Yia lorsqu'un angle de différence prédéfini est atteint ;

e) entraîner le moteur électrique (2) pour régler la position de rotation de l'arbre de direction (300) dans un deuxième sens ;

f) mesurer en continu un angle de rotor Yt de la position de rotation du rotor à l'aide d'un capteur de position de rotation (7) ;

g) mesurer en continu l'angle de rotation Xt1 de la position de rotation absolue de l'arbre de direction (300) à l'aide d'une unité de détection d'angle de direction (10), l'angle de rotation Xt1 étant balayé à l'aide d'une transmission ayant un facteur de multiplication UF ;

h) mémoriser la paire de valeurs de mesure à partir de l'angle du rotor Xt1ib, Yib lors de la variation de l'angle de rotation Xt1 par rapport à la valeur mesurée à l'instant de balayage immédiatement précédent ;

i) former un couple de mesure comprenant l'angle de rotation absolue Xk de l'arbre de direction, comme moyenne des deux angles de rotation mesurés Xt1a et Xt1b, et l'angle du rotor Yk comme moyenne des deux angles de rotor mesurés Ya et Yb ;

j) mémoriser le couple de mesure Xk, Yk dans un moyen (29) de mémorisation.

14. Procédé d'étalonnage d'un dispositif de mesure destiné à mesurer un angle de rotation absolu de haute précision Xt de la position de rotation d'un arbre de direction (300) monté de manière à pouvoir tourner, la rotation du rotor d'un moteur électrique (2) étant transmise par accouplement à la rotation de l'arbre de direction (300) à l'aide d'une transmission ayant un facteur de multiplication de transmission K pour assister la rotation de l'arbre de direction (300), le procédé comprenant les étapes suivantes :

a) entraîner le moteur électrique (2) pour régler la position de rotation de l'arbre de direction (300) dans un premier sens ;

b) mesurer en continu un angle de rotor Yt de la position de rotation du rotor à l'aide d'un capteur de position de rotor (7) avec un intervalle de balayage ;

c) mesurer en continu l'angle de rotation Xt1 de la position de rotation absolue de l'arbre de direction (300) à l'aide d'une unité de capteur d'angle de direction (10), l'angle de rotation Xt1 étant balayé à l'aide d'une transmission ayant un facteur de multiplication UF et le balayage se faisant avec ledit intervalle de balayage ;

d) mémoriser la paire de valeurs de mesure à partir de l'angle du rotor Xt1ia, Yia comme premier couple d'étalonnage lors de la variation de l'angle de rotation Xt1 par rapport à la valeur mesurée à l'instant de balayage immédiatement précédent ;

e) mémoriser la valeur zéro en tant que valeur de nombre de tours actuelle Na dans une unité de mémorisation pour le premier couple d'étalonnage associé ;

f) entraîner le moteur électrique (2) pour régler la position de rotation de l'arbre de direction (300) dans un deuxième sens ;

g) mesurer en continu un angle de rotor Yt de la position de rotation du rotor à l'aide d'un capteur de position de rotor (7) avec l'intervalle de balayage susmentionné ;

h) mesurer en continu l'angle de rotation Xt1 de la position de rotation absolue de l'arbre de direction (300) à l'aide d'une unité de détection d'angle de direction (10), l'angle de rotation Xt1 étant balayé à l'aide d'une transmission ayant un facteur de multiplication UF ;

i) mémoriser la paire de valeurs de mesure à partir de l'angle du rotor Xtlib, Yib comme deuxième couple d'étalonnage lors de la variation de l'angle de rotation Xt1 par rapport à la valeur mesurée à l'instant de balayage immédiatement précédent ;

j) mémoriser la valeur zéro en tant que valeur de nombre de tours actuelle Nb dans une unité de mémorisation pour le deuxième couple d'étalonnage associé.

15. Procédé d'étalonnage d'un dispositif de mesure selon les revendications 11 à 13, **caractérisé en ce que** le procédé comprend en outre les étapes suivantes :

a) mesurer en continu l'angle de rotor Yt avec ledit intervalle de balayage ;

b) lorsque l'angle de rotor Yt augmente d'un pas de temps de l'intervalle de balayage jusqu'au pas de temps suivant d'une valeur supérieure à 80°, la valeur de nombre de tours mémorisée étant augmentée d'un comptage et mémorisée comme valeur de nombre de tours actuelle N ;

c) lorsque l'angle de rotor Yt diminue d'un pas de temps de l'intervalle de balayage jusqu'au pas de temps suivant d'une valeur supérieure à +80°, la valeur de nombre de tours mémorisée étant réduite d'un comptage et mémorisée comme valeur de nombre de tours actuelle N.

**Figur 1**

**Figur 2**

**Figur 3**

8, 9 10

211

231

13

3

301

4

5

**Figur 4**

301 11 12

15

17

231

211

25

221

21

14

22

242

24

20

16

18

23

232

13

**Figur 5**

15

17

19

13

212

211

21

18

16

232

23

231

202

20

11

301

14

**Figur 6**

**Figur 7**

**Figur 8**

**Figur 9**

**Figur 10**

**Figur 11**

**Figur 12**

**Figur 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008011448 A1
- DE 60011684 T2
- WO 2015078664 A1
- DE 102014210245 A1